# EUROPEAN PATENT SPECIFICATION

(11) **EP 2 114 143 B1**
(45) Date of publication and mention of the grant of the patent: **16.04.2014**
(21) Application number: 08726241.6
(22) Date of filing: 28.02.2008
(51) Int. Cl.: A01N 25/30, A01N 47/36, A01P 13/00, A01N 25/22, A01N 25/02, A01N 25/04

(54) **LIQUID SULFONYLUREA HERBICIDE FORMULATIONS**
FLÜSSIGE SULFONYLHARNSTOFF-HERBIZIDFORMULIERUNGEN
FORMULATIONS HERBICIDES LIQUIDES DE SULFONYLUREE

(30) Priority: 08.03.2007 US 905635 P
(43) Date of publication of application: 11.11.2009
(73) Proprietor: E. I. Du Pont de Nemours and Company, Wilmington, DE 19898 (US)
(72) Inventor: REAP, James, J., Wilmington, Delaware 19810 (US)
(74) Representative: Beacham, Annabel Rose
(86) International application number: PCT/US2008/002668
(87) International publication number: WO 2008/108973

(56) References cited:
- US-A1- 2002 016 263
- US-A1- 2005 026 787
- US-A1- 2005 113 254
- US-A1- 2006 276 337

## Description

### FIELD OF THE INVENTION

This invention relates to certain liquid formulations of sulfonylurea herbicides.

### BACKGROUND OF THE INVENTION

Since the discovery of sulfonylurea herbicides, more than two dozen sulfonylureas have been commercially developed for selective weed control in a wide variety of crops (The Pesticide Manual, Thirteenth Edition, C. D. S. Tomlin, ed., British Crop Protection Council, Hampshire, U.K., 2003). As the mode of action of sulfonylurea herbicides is inhibition of the enzyme acetolactate synthase (ALS) found in plants but not animals, sulfonylurea herbicides provide a valued combination of excellent efficacy against weeds with low use rates and very low toxicity to animals.

Sulfonylurea herbicides like other agricultural chemicals can be formulated as concentrates in a variety of different forms, including liquid compositions such as emulsifiable concentrates and solid compositions such as wettable powders and granules.

Liquid formulation concentrates can be easily measured and poured, and when diluted with water typically give easily sprayed aqueous solutions or dispersions. However, as for other types of formulations, formulation ingredients can affect the level of weed control efficacy obtained from the active ingredient. Compared to solid formulations, liquid formulations of sulfonylureas are more prone to certain problems. When dissolved or dispersed in a liquid carrier in the presence of water, sulfonylureas are subject to hydrolysis. In addition to hydrolysis, crystal growth can occur during storage of concentrated liquid formulations in which active ingredients are dissolved or dispersed, and suspended active ingredients are prone to settling out, so that obtaining stable liquid formulations is challenging. New stabilized liquid formulations of sulfonylurea herbicides providing consistently good herbicidal activity when diluted with water and sprayed on undesired vegetation have now been discovered.

US2002/0016263 discloses liquid herbicidal compositions comprising a sulfonylurea and one or more derivatives of polycarboxylic acids, preferably gemini surfactants and/or sulfosuccinates.

US2005/0026787 discloses liquid herbicidal formulations comprising a sulfonylurea, one or more organic solvents and one or more inorganic salts, preferably basic inorganic salts.

US2006/0276337 discloses herbicidal oil suspension concentrates comprising a pyridylsulfonylurea in suspended form and one or more organic solvents.

US2005/0113254 discloses herbicidally active compositions comprising one or more sulfonylureas from the group consisting of metsulfuron, thifensulfuron, tribenuron, chlorsulfuron and their salts and esters, and one or more safeners from the group mefenpyr, isoxadifen, cloquintocet and fenchlorazole and their salts and esters.

### SUMMARY OF THE INVENTION

This invention is directed to a single liquid-phase herbicide composition comprising by weight
(a) from 0.1 to 30% of one or more sulfonylurea herbicides selected from azimsulfuron, bensulfuron-methyl, chlorimuron-ethyl, chlorsulfuron, ethametsulfuron-methyl, flupyrsulfuron-methyl, metsulfuron-methyl, nicosulfuron, rimsulfuron, sulfometuron-methyl, thifensulfuron-methyl, tribenuron-methyl, and triflusulfuron-methyl, and salts thereof;
(b) from 0 to 40% of one or more biologically active agents other than sulfonylurea herbicides;
(c) from 0 to 30% of one or more herbicide safeners;
(d) from 10 to 99.9% of one or more polyalkoxylated triglycerides wherein no more than 50% by weight of the fatty acid-derived moieties in the polyalkoxylated triglycerides are derived from hydroxy fatty acids;
(e) from 0 to 89.9% of one or more fatty acid esters of C₁-C₄ alkanols; and
(f) from 0 to 70% of one or more additional formulating ingredients.

### DETAILS OF THE INVENTION

The term "single liquid-phase composition" and derivative terms such as "single liquid-phase herbicide composition" refer to compositions consisting of a single liquid phase. The term "single liquid-phase composition" therefore excludes compositions comprising a plurality of liquid phases such as emulsions. The term "single liquid-phase composition" does not exclude compositions comprising one or more solid phases in addition to the single liquid phase, such as suspensions and dispersions of solid particles.

The term "nonsulfonylurea herbicide" refers to herbicides other than sulfonylureas. As used in the present disclosure and claims, the term "fatty acid" refers to a monocarboxylic acid having a hydrocarbon chain containing 3 to 23, more particularly 3 to 21 carbon atoms. The hydrocarbon chain may be branched and may be unsaturated (e.g., contain one or more carbon-carbon double bonds).

In the present disclosure and claims, the expression "fatty acid-derived moiety" refers to the portion of a molecular substituent that conceptually could be connected to the molecule (i.e. derived) by esterification of a fatty acid. As used in the present disclosure and claims, term "derived" is only conceptual and does not require actual synthesis (e.g., from a fatty acid). A fatty acid-derived moiety constitutes the acyl part of a fatty acid consisting of a carbonyl function (C=O) bonded to an alkyl or alkenyl (i.e. having one or more carbon-carbon double bonds) chain comprising 3 to 23 carbon atoms (the chain having a hydroxy substituent in the case of hydroxy fatty acids). In the present disclosure and claims, statement of percent by weight of certain fatty acid-derived moieties refers to (i.e. is numerically determined by) the relative percentage by weight of the fatty acids that would be formed by deesterification of compounds comprising the fatty acid-derived moieties. As referred to herein, "hydroxy fatty acid" means a fatty acid comprising at least one hydroxy (-OH) substituent attached to an alkyl or alkenyl moiety of the fatty acid (e.g., ricinoleic acid).

For sake of brevity in the present disclosure and claims the optionally alkyl-substituted oxyethylene units in polyalkoxylated triglycerides are more simply referred to as "alkoxyl units". Oxyethylene units not alkyl-substituted are simply referred to as "ethoxyl units".

The term "unimodal distribution" refers to a statistical distribution having one mode. The term "bimodal distribution" refers to a statistical distribution having two modes. The term "multimodal distribution" refers to a statistical distribution having two or more modes.

Preferred embodiments of the present invention include:
Embodiment A1. The composition according to claim 1 wherein component (a) (i.e. the one or more sulfonylurea herbicides) is at least 0.5% of the composition by weight.
Embodiment A2. The composition of Embodiment A1 wherein component (a) is at least 2% of the composition by weight.
Embodiment A3. The composition of Embodiment A2 wherein component (a) is at least 4% of the composition by weight.
Embodiment A4. The composition according to claim 1 wherein component (a) is no more than 15% of the composition by weight.
Embodiment A5. The composition of Embodiment A4 wherein component (a) is no more than 12% of the composition by weight.
Embodiment A6. The composition of Embodiment A5 wherein component (a) is no more than 10% of the composition by weight.
Embodiment A7. The composition of Embodiment A6 wherein component (a) is no more than 8% of the composition by weight.
Embodiment A8. The composition according to claim 1 wherein component (a) is selected from flupyrsulfuron-methyl, nicosulfuron and rimsulfuron, and salts thereof.
Embodiment A9. The composition of Embodiment A8 wherein component (a) is selected from metsulfuron-methyl, nicosulfuron, rimsulfuron and thifensulfuron-methyl, and salts thereof.
Embodiment A10. The composition of Embodiment A9 wherein component (a) is selected from nicosulfuron, rimsulfuron and thifensulfuron-methyl, and salts thereof.
Embodiment A11. The composition of Embodiment A9 wherein component (a) is selected from nicosulfuron and rimsulfuron, and salts thereof.
Embodiment A12. The composition of Embodiment A9 wherein component (a) is selected from nicosulfuron and thifensulfuron-methyl, and salts thereof.
Embodiment A13. The composition of Embodiment A9 wherein component (a) is selected from nicosulfuron and salts thereof.
Embodiment A14. The composition according to claim 1 wherein component (a) is selected from free acid forms of metsulfuron-methyl, nicosulfuron, rimsulfuron and thifensulfuron-methyl.
Embodiment A15. The composition of Embodiment A14 wherein component (a) is selected from free acid forms of nicosulfuron, rimsulfuron and thifensulfuron-methyl.
Embodiment A16. The composition of Embodiment A15 wherein component (a) is selected from free acid forms of nicosulfuron and rimsulfuron.
Embodiment A17. The composition of Embodiment A15 wherein component (a) is selected from free acid forms of nicosulfuron and thifensulfuron-methyl.
Embodiment A 18. The composition of Embodiment A 15 wherein component (a) is the free acid form of nicosulfuron.
Embodiment A19. The composition of any one of Embodiments A15 through A18 wherein the free acid form of nicosulfuron is a hydrate.
Embodiment A20. The composition of Embodiment A15 wherein component (a) is the free acid form of rimsulfuron.
Embodiment A21. The composition of Embodiment A15 wherein component (a) is the free acid form of thifensulfuron-methyl.
Embodiment A22. The composition of any one of Embodiments A12, A17 or A19 wherein nicosulfuron is 2 to 8% of the composition by weight and thifensulfuron-methyl is up to 2% of the composition by weight.
Embodiment A23. The composition of any one of Embodiments A13, A18 or A19 wherein nicosulfuron is from 2 to 8% of the composition by weight.
Embodiment B1. The composition according to claim 1 wherein component (b) (i.e. the one or more biologically active agents other than sulfonylurea herbicides) is at least 0.1% of the composition by weight.
Embodiment B2. The composition of Embodiment B1 wherein component (b) comprises one or more nonsulfonylurea herbicides.
Embodiment B3. The composition of Embodiment B2 wherein component (b) comprises atrazine.
Embodiment B4. The composition of Embodiment B2 wherein component (b) comprises dicamba.
Embodiment B5. The composition of Embodiment B2 wherein component (b) comprises flumioxazin.
Embodiment C1. The composition according to claim 1 wherein component (c) (i.e. the one or more herbicide safeners) is at least 0.1% of the composition by weight.
Embodiment C2. The composition of Embodiment C1 wherein component (c) comprises isoxadifen-ethyl.
Embodiment C3. The composition of Embodiment C1 wherein component (c) comprises mefenpyr-diethyl.
Embodiment C4. The composition of Embodiment C1 wherein component (c) comprises cloquintocet-mexyl.
Embodiment D1. The composition according to claim 1 wherein component (d) (i.e. the one or more polyalkoxylated triglycerides wherein no more than 50% by weight of the fatty acid-derived moieties in the polyalkoxylated triglycerides are derived from hydroxy fatty acids) is at least 15% of the composition by weight.
Embodiment D2. The composition of Embodiment D1 wherein component (d) is at least 20% of the composition by weight.
Embodiment D3. The composition of Embodiment D2 wherein component (d) is at least 25% of the composition by weight.
Embodiment D4. The composition of Embodiment D3 wherein component (d) is at least 30% of the composition by weight.
Embodiment D5. The composition of Embodiment D4 wherein component (d) is at least 35% of the composition by weight.
Embodiment D6. The composition of Embodiment D5 wherein component (d) is at least 40% of the composition by weight.
Embodiment D7. The composition according to claim 1 wherein component (d) is no more than 95% of the composition by weight.
Embodiment D8. The composition of Embodiment D7 wherein component (d) is no more than 70% of the composition by weight.
Embodiment D9. The composition of Embodiment D8 wherein component (d) is no more than 60% of the composition by weight.
Embodiment D10. The composition of Embodiment D9 wherein component (d) is no more than 50% of the composition by weight.
Embodiment D11. The composition of Embodiment D10 wherein component (d) is no more than 45% of the composition by weight.
Embodiment D12. The composition according to claim 1 wherein component (d) comprises a polyethoxylated triglyceride.
Embodiment D13. The composition of Embodiment D12 wherein the no more than 50% by weight of the fatty acid-derived moieties in the polyethoxylated triglyceride is derived from hydroxy fatty acids.
Embodiment D 14. The composition of Embodiment D12 or D 13 wherein the polyethoxylated triglyceride contains an average of 3 to 100 ethylene oxide-derived units in polyethoxylated triglyceride molecules.
Embodiment D15. The composition of Embodiment D 14 wherein the polyethoxylated triglyceride contains an average of 5 to 50 ethylene oxide-derived units in polyethoxylated triglyceride molecules.
Embodiment D16. The composition of Embodiment D15 wherein the polyethoxylated triglyceride contains an average of 10 to 30 ethylene oxide-derived units in polyethoxylated triglyceride molecules.
Embodiment D 17. The composition according to claim 1 wherein component (d) comprises a polyalkoxylated vegetable oil.
Embodiment D18. The composition of Embodiment D17 wherein component (d) comprises one or more polyalkoxylated vegetable oils selected from polyethoxylated soybean oil and polyethoxylated rapeseed oil.
Embodiment D 19. The composition of Embodiment D 18 wherein component (d) comprises polyethoxylated soybean oil.
Embodiment D20. The composition according to claim 1 wherein component (d) comprises at least 50% by weight of one or more polyalkoxylated triglycerides other than polyalkoxylated castor oil.
Embodiment D21. The composition of Embodiment D20 wherein component (d) comprises at least 90% by weight of one or more polyalkoxylated triglycerides other than polyalkoxylated castor oil.
Embodiment D22. The composition of Embodiment D21 wherein component (d) comprises at least 99% by weight of one or more polyalkoxylated triglycerides other than polyalkoxylated castor oil.
Embodiment D23. The composition according to claim 1 wherein no more than 44% by weight of the fatty acid-derived moieties in the polyalkoxylated triglycerides of component (d) are derived from hydroxy fatty acids.
Embodiment D24. The composition of Embodiment D23 wherein no more than 10% by weight of the fatty acid-derived moieties in the polyalkoxylated triglycerides of component (d) are derived from hydroxy fatty acids.
Embodiment D25. The composition of Embodiment D24 wherein no more than 9% by weight of the fatty acid-derived moieties in the polyalkoxylated triglycerides of component (d) are derived from hydroxy fatty acids.
Embodiment D26. The composition of Embodiment D25 wherein no more than 5% by weight of the fatty acid-derived moieties in the polyalkoxylated triglycerides of component (d) are derived from hydroxy fatty acids.
Embodiment D27. The composition of Embodiment D26 wherein no more than 2% by weight of the fatty acid-derived moieties in the polyalkoxylated triglycerides of component (d) are derived from hydroxy fatty acids.
Embodiment D28. The composition of Embodiment D27 wherein no more than 1% by weight of the fatty acid-derived moieties in the polyalkoxylated triglycerides of component (d) are derived from hydroxy fatty acids.
Embodiment D29. The composition of Embodiment D28 wherein no more than 0.1% by weight of the fatty acid-derived moieties in the polyalkoxylated triglycerides of component (d) are derived from hydroxy fatty acids.
Embodiment D30. The composition according to claim 1 wherein the fatty acid-derived moieties in the polyalkoxylated triglycerides of component (d) are derived from other than hydroxy fatty acids.
Embodiment D31. The composition according to claim 1 wherein at least 90% by weight of the fatty acid-derived moieties of the polyalkoxylated triglycerides of component (d) is derived from fatty acid compounds selected from caprylic acid, capric acid, lauric acid, myristic acid, palmitic acid, palmitoleic acid, stearic acid, oleic acid, linoleic acid, linolenic acid, stearidonic acid, arachidic (eicosanoic) acid, gadoleic (eicosenoic) acid, timnodonic (eicosapentaenoic) acid, behenic acid, erucic acid, docosahexaenoic acid, lignoceric acid and nervonic acid.
Embodiment D32. The composition according to claim 1 wherein at least 95% by weight of the fatty acid-derived moieties of the polyalkoxylated triglycerides of component (d) is derived from fatty acid compounds selected from caprylic acid, capric acid, lauric acid, myristic acid, palmitic acid, palmitoleic acid, stearic acid, oleic acid, linoleic acid, linolenic acid, stearidonic acid, arachidic acid, gadoleic acid, timnodonic acid, behenic acid, erucic acid, docosahexaenoic acid, lignoceric acid and nervonic acid.
Embodiment D33. The composition according to claim 1 wherein at least 90% by weight of the fatty acid-derived moieties of the polyalkoxylated triglycerides of component (d) is derived from fatty acid compounds selected from caprylic acid, capric acid, lauric acid, myristic acid, palmitic acid, palmitoleic acid, stearic acid, oleic acid, linoleic acid, linolenic acid, arachidic acid, gadoleic acid and erucic acid.
Embodiment D34. The composition according to claim 1 wherein at least 40% by weight of the fatty acid-derived moieties of the polyalkoxylated triglycerides of component (d) is derived from fatty acid compounds selected from palmitic acid, stearic acid, oleic acid, linoleic acid and linolenic acid.
Embodiment D35. The composition of Embodiment D34 wherein at least 80% by weight of the fatty acid-derived moieties of the polyalkoxylated triglycerides of component (d) is derived from fatty acid compounds selected from palmitic acid, stearic acid, oleic acid, linoleic acid and linolenic acid.
Embodiment D36. The composition of Embodiment D35 wherein at least 90% by weight of the fatty acid-derived moieties of the polyalkoxylated triglycerides of component (d) is derived from fatty acid compounds selected from palmitic acid, stearic acid, oleic acid, linoleic acid and linolenic acid.
Embodiment D37. The composition of Embodiment D36 wherein at least 95% by weight of the fatty acid-derived moieties of the polyalkoxylated triglycerides of component (d) is derived from fatty acid compounds selected from palmitic acid, stearic acid, oleic acid, linoleic acid and linolenic acid.
Embodiment D38. The composition according to claim 1 or any one of Embodiments D1-D37 wherein the fatty acid-derived moieties in the polyalkoxylated triglycerides of component (d) are derived from unbranched fatty acids.
Embodiment D39. The composition according to claim 1 or any one of Embodiments D1-D38 wherein no more than 90% by weight of the fatty acid-derived moieties of the polyalkoxylated triglycerides of component (d) is derived from any one fatty acid compound.
Embodiment D40. The composition of Embodiment D39 wherein no more than 85% by weight of the fatty acid-derived moieties of the polyalkoxylated triglycerides of component (d) is derived from any one fatty acid compound.
Embodiment D41. The composition of Embodiment D40 wherein no more than 80% by weight of the fatty acid-derived moieties of the polyalkoxylated triglycerides of component (d) is derived from any one fatty acid compound.
Embodiment D42. The composition of Embodiment D41 wherein no more than 70% by weight of the fatty acid-derived moieties of the polyalkoxylated triglycerides of component (d) is derived from any one fatty acid compound.
Embodiment D43. The composition of Embodiment D42 wherein no more than 60% by weight of the fatty acid-derived moieties of the polyalkoxylated triglycerides of component (d) is derived from any one fatty acid compound.
Embodiment D44. The composition of Embodiment D43 wherein no more than 55% by weight of the fatty acid-derived moieties of the polyalkoxylated triglycerides of component (d) is derived from any one fatty acid compound.
Embodiment D45. The composition according to claim 1 or any one of Embodiments D1 through D44 wherein component (d) is provided by combining in a weight ratio from 4 : 1 to 1 : 4 two polyalkoxylated triglyceride constituents having average alkoxylation differing by at least 5 alkoxyl units.
Embodiment D46. The composition of Embodiment D45 wherein the average alkoxylation of the two polyalkoxylated triglyceride constituents differs by at least 10 alkoxyl units.
Embodiment D47. The composition of Embodiment D46 wherein the average alkoxylation of the two polyalkoxylated triglyceride constituents differs by at least 15 alkoxyl units.
Embodiment D48. The composition of Embodiment D45 wherein the average alkoxylation of the two polyalkoxylated triglyceride constituents differs by not more than 40 alkoxyl units.
Embodiment D49. The composition of Embodiment D48 wherein the average alkoxylation of the two polyalkoxylated triglyceride constituents differs by not more than 30 alkoxyl units.
Embodiment D50. The composition of Embodiment D49 wherein the average alkoxylation of the two polyalkoxylated triglyceride constituents differs by not more than 25 alkoxyl units.
Embodiment D51. The composition of Embodiment D45 wherein the average alkoxylation of the two polyalkoxylated triglyceride constituents differs by 20 alkoxyl units.
Embodiment D52. The composition of Embodiment D51 wherein the average alkoxylation of one polyalkoxylated triglyceride constituent is 10 alkoxyl units and the average alkoxylation of the other polyalkoxylated triglyceride constituent is 30 alkoxyl units.
Embodiment D53. The composition of any one of Embodiments D45 through D52 wherein the two polyalkoxylated triglyceride constituents are in a weight ratio from 3 : 1 to 1 : 3.
Embodiment D54. The composition of Embodiment D53 wherein the two polyalkoxylated triglyceride constituents are in a weight ratio from 2 : 1 to 1 : 2. Embodiment D55. The composition of Embodiment D54 wherein the two polyalkoxylated triglyceride constituents are in a weight ratio from 3 : 2 to 2 : 3.
Embodiment D56. The composition according to claim 1 or any one of Embodiments D 1 through D44 wherein component (d) is a polyalkoxylated triglyceride composition wherein no more than 50% by weight of the fatty acid-derived moieties in the polyalkoxylated triglycerides are derived from hydroxy fatty acids, the polyalkoxylated triglyceride composition having a bimodal distribution of number of alkoxyl units per molecule wherein the modes differ by at least 4 alkoxyl units.
Embodiment D57. The composition of Embodiment D56 wherein the modes differ by at least 8 alkoxyl units.
Embodiment D58. The composition of Embodiment D57 wherein the modes differ by at least 16 alkoxyl units.
Embodiment D59. The composition of Embodiment D58 wherein the modes differ by 20 alkoxyl units.
Embodiment D60. The composition of Embodiment D56 wherein the modes differ by not more than 40 alkoxyl units.
Embodiment D61. The composition of Embodiment D60 wherein the modes differ by not more than 30 alkoxyl units.
Embodiment D62. The composition of Embodiment D61 wherein the modes differ by not more than 25 alkoxyl units.
Embodiment D63. The composition according to claim 1 or any one of Embodiments D1 through D44 wherein component (d) is a polyalkoxylated triglyceride composition wherein no more than 50% by weight of the fatty acid-derived moieties in the polyalkoxylated triglycerides are derived from hydroxy fatty acids, the polyalkoxylated triglyceride composition having a multimodal distribution of number of alkoxyl units per molecule wherein at least two modes differ by at least 4 alkoxyl units.
Embodiment D64. The composition of Embodiment D63 wherein at least two modes differ by at least 8 alkoxyl units.
Embodiment D65. The composition of Embodiment D64 wherein at least two modes differ by at least 16 alkoxyl units.
Embodiment D66. The composition of Embodiment D65 wherein at least two modes differ by 20 alkoxyl units.
Embodiment D67. The composition of Embodiment D66 wherein the highest alkoxyl unit mode differs from the lowest alkoxyl unit mode by not more than 40 alkoxyl units.
Embodiment D68. The composition of Embodiment D67 wherein the highest alkoxyl unit mode differs from the lowest alkoxyl unit mode by not more than 30 alkoxyl units.
Embodiment D69. The composition of Embodiment D68 wherein the highest alkoxyl unit mode differs from the lowest alkoxyl unit mode by not more than 25 alkoxyl units.
Embodiment D70. The composition of any one of Embodiments D56 through D69 wherein the lowest alkoxyl unit mode is at least 4 alkoxyl units.
Embodiment D71. The composition of Embodiment D70 wherein the lowest alkoxyl unit mode is at least 8 alkoxyl units.
Embodiment D72. The composition of Embodiment D71 wherein the lowest alkoxyl unit mode is 10 alkoxyl units.
Embodiment D73. The composition of any one of Embodiments D56 through D69 wherein the highest alkoxyl unit mode is not more than 50 alkoxyl units.
Embodiment D74. The composition of Embodiment D73 wherein the highest alkoxyl unit mode is not more than 40 alkoxyl units.
Embodiment D75. The composition of Embodiment D74 wherein the highest alkoxyl unit mode is not more than 35 alkoxyl units.
Embodiment D76. The composition of Embodiment D75 wherein the highest alkoxyl unit mode is 30 alkoxyl units.
Embodiment D77. The composition of any one of Embodiments D45 through D76 wherein the polyalkoxylated triglyceride constituents or composition comprise polyethoxylated triglycerides (i.e. the alkoxyl units are unsubstituted oxyethylene units).
Embodiment E1. The composition according to the present invention wherein component (e) (i.e. the one or more fatty acid esters of C₁-C₄ alkanols) is at least 0.1% of the composition by weight.
Embodiment E2. The composition of Embodiment E1 wherein component (e) is at least 10% of the composition by weight.
Embodiment E3. The composition of Embodiment E2 wherein component (e) is at least 20% of the composition by weight.
Embodiment E4. The composition of Embodiment E3 wherein component (e) is at least 30% of the composition by weight.
Embodiment E5. The composition of Embodiment E4 wherein component (e) is at least 35% of the composition by weight.
Embodiment E6. The composition of Embodiment E5 wherein component (e) is at least 40% of the composition by weight.
Embodiment E7. The composition of Embodiment E6 wherein component (e) is at least 50% of the composition by weight.
Embodiment E8. The composition according to claim 1 wherein component (e) is no more than 75% of the composition by weight.
Embodiment E9. The composition of Embodiment E8 wherein component (e) is no more than 65% of the composition by weight.
Embodiment E10. The composition of Embodiment E1 wherein component (e) comprises methyl esters of one or more fatty acids.
Embodiment E11. The composition of Embodiment E1 wherein at least 80% by weight of component (e) consists of esters of fatty acids containing 8 to 22 carbon atoms.
Embodiment E12. The composition of Embodiment E11 wherein at least 90% by weight of component (e) consists of esters of fatty acids containing 8 to 22 carbon atoms.
Embodiment E13. The composition of Embodiment E1 wherein component (e) comprises a saturated or an unsaturated C₁₀-C₂₂ fatty acid ester of a C₁-C₄ alkanol.
Embodiment E14. The composition of Embodiment E13 wherein component (e) comprises a saturated or an unsaturated C₁₂-C₂₀ fatty acid ester of a C₁-C₄ alkanols.
Embodiment E15. The composition of Embodiment E14 wherein component (e) comprises a saturated or an unsaturated C₁₆-C₁₈ fatty acid ester of a C₁-C₄ alkanol.
Embodiment E16. The composition of Embodiment E15 wherein component (e) comprises a saturated or an unsaturated C₁₆-C₁₈ fatty acid ester of a C₁-C₂ alkanol.
Embodiment E17. The composition of Embodiment E16 wherein component (e) comprises a saturated or an unsaturated C₁₆-C₁₈ fatty acid ester of methanol.
Embodiment E18. The composition of Embodiment E1 wherein component (e) comprises a methylated seed oil of sunflower, soybean, cotton or linseed.
Embodiment E19. The composition of Embodiment E1 wherein component (e) comprises a methylated seed oil of rapeseed or soybean.
Embodiment E20. The composition of Embodiment E18 or E19 wherein component (e) comprises methylated soybean oil (methyl soyate).
Embodiment F1. The composition according to claim 1 wherein component (f) (i.e. the one or more additional formulating ingredients) does not exceed 60% of the composition by weight.
Embodiment F2. The composition of Embodiment F1 wherein component (f) does not exceed 50% of the composition by weight.
Embodiment F3. The composition of Embodiment F2 wherein component (f) does not exceed 40% of the composition by weight.
Embodiment F4. The composition of Embodiment F3 wherein component (f) does not exceed 30% of the composition by weight.
Embodiment F5. The composition of Embodiment F4 wherein component (f) does not exceed 25% of the composition by weight.
Embodiment F6. The composition of Embodiment F5 wherein component (f) does not exceed 20% of the composition by weight.
Embodiment F7. The composition of Embodiment F6 wherein component (f) does not exceed 15% of the composition by weight.
Embodiment F8. The composition of Embodiment F7 wherein component (f) does not exceed 10% of the composition by weight.
Embodiment F9. The composition according to claim 1 wherein component (f) is at least 0.1% of the composition by weight.
Embodiment F10. The composition of Embodiment F9 wherein component (f) is selected from surfactants, suspending agents and diluents.
Embodiment F11. The composition of Embodiment F9 or F10 wherein component (f) comprises one or more dispersants in an amount up to 30% of the composition by weight.
Embodiment F12. The composition of Embodiment F11 wherein component (f) comprises one or more dispersants in an amount up to 20% of the composition by weight.
Embodiment F13. The composition of Embodiment F12 wherein component (f) comprises one or more dispersants in an amount up to 10% of the composition by weight.
Embodiment F14. The composition of Embodiment F10 or F11 wherein component (f) comprises one or more lignosulfonates.
Embodiment F15. The composition of Embodiment F14 wherein component (f) comprises one or more ammonium, alkali metal or alkaline earth metal lignosulfonate salts.
Embodiment F16. The composition of Embodiment F15 wherein component (f) comprises sodium lignosulfonate.
Embodiment F17. The composition of Embodiment F14 wherein component (f) comprises up to 30% of one or more lignosulfonates.
Embodiment F18. The composition of Embodiment F14 or F17 wherein component (f) comprises one or more lignosulfonates in a total amount of at least 0.1% of the composition by weight.
Embodiment F19. The composition of Embodiment F18 wherein component (f) comprises one or more lignosulfonates in a total amount of at least 0.5% of the composition by weight.
Embodiment F20. The composition of Embodiment F19 wherein component (f) comprises one or more lignosulfonates in a total amount of at least 1% of the composition by weight.
Embodiment F21. The composition of Embodiment F20 wherein component (f) comprises one or more lignosulfonates in a total amount of at least 2% of the composition by weight.
Embodiment F22. The composition of Embodiment F21 wherein component (f) comprises one or more lignosulfonates in a total amount of at least 3% of the composition by weight.
Embodiment F23. The composition of Embodiment F14 or F17 wherein component (f) comprises one or more lignosulfonates in a total amount of no more than 10% of the composition by weight.
Embodiment F24. The composition of Embodiment F23 wherein component (f) comprises one or more lignosulfonates in a total amount of no more than 8% of the composition by weight.
Embodiment F25. The composition of Embodiment F24 wherein component (f) comprises one or more lignosulfonates in a total amount of no more than 6% of the composition by weight.
Embodiment F26. The composition of Embodiment F25 wherein component (f) comprises one or more lignosulfonates in a total amount of no more than 5% of the composition by weight.
Embodiment F27. The composition of Embodiment F26 wherein component (f) comprises one or more lignosulfonates in a total amount of no more than 4% of the composition by weight.
Embodiment F28. The composition of Embodiment F9 or F10 wherein component (f) comprises one or more surfactants selected from the group consisting of polyethoxylated sorbitan ester surfactants and polyethoxylated sorbitol ester surfactants.
Embodiment F29. The composition of Embodiment F28 wherein component (f) comprises a polyethoxylated sorbitan ester surfactant.
Embodiment F30. The composition of Embodiment F28 wherein component (f) comprises a polyethoxylated sorbitol ester surfactant.
Embodiment F31. The composition of Embodiment F28 wherein component (f) comprises both a polyethoxylated sorbitan ester surfactant and a polyethoxylated sorbitol ester surfactant.
Embodiment F32. The composition of Embodiment F9 or F10 wherein component (f) comprises a clay.
Embodiment F33. The composition of Embodiment F32 wherein the clay is at least 0.1% of the composition by weight.
Embodiment F34. The composition of Embodiment F33 wherein the clay is at least 0.5% of the composition by weight.
Embodiment F35. The composition of Embodiment F34 wherein the clay is no more than 5% of the composition by weight.
Embodiment F36. The composition of Embodiment F32 wherein the clay is no more than 3% of the composition by weight.
Embodiment F37. The composition of Embodiment F9 or F10 wherein component (f) comprises urea.
Embodiment F38. The composition of Embodiment F37 wherein urea is at least 0.1% of the composition by weight.
Embodiment F39. The composition of Embodiment F38 wherein urea is at least 0.2% of the composition by weight.
Embodiment F40. The composition of Embodiment F39 wherein urea is at least 1% of the composition by weight.
Embodiment F41. The composition of Embodiment F37 wherein urea is no more than 10% of the composition by weight.
Embodiment F42. The composition of Embodiment F41 wherein urea is no more than 5% of the composition by weight.
Embodiment F43. The composition of Embodiment F42 wherein urea is no more than 3% of the composition by weight.
Embodiment F44. The composition of Embodiment F9 or F10 wherein the surfactants in component (f) (i.e. surfactants other than the polyalkoxylated triglycerides of component (d)) are no more than 10% of the composition by weight.
Embodiment F45. The composition of Embodiment F44 wherein the surfactants in component (f) are no more than 5% of the composition by weight.
Embodiment F46. The composition of Embodiment F45 wherein the surfactants in component (f) are no more than 4% of the composition by weight.
Embodiment F47. The composition of Embodiment F46 wherein the surfactants in component (f) are no more than 3% of the composition by weight.
Embodiment F48. The composition of Embodiment F47 wherein the surfactants in component (f) are no more than 2% of the composition by weight.
Embodiment G1. The composition according to claim 1 or any one of the preceding Embodiments containing no more than 1% water by weight.
Embodiment G2. The composition of Embodiment G1 containing no more than 0.5% water by weight.
Embodiment G3. The composition of Embodiment G2 containing no more than 0.1% water by weight.
Embodiment H1. The composition according to claim 1 or any one of the preceding Embodiments containing no more than 10% of (unmodified) triglycerides by weight.
Embodiment H2. The composition of Embodiment H1 containing no more than 5% of triglycerides by weight.
Embodiment H3. The composition of Embodiment H2 containing no more than 2% of triglycerides by weight.
Embodiment H4. The composition of Embodiment H3 containing no more than 1% of triglycerides by weight.
Embodiment H5. The composition of Embodiment H4 containing no more than 0.5% of triglycerides by weight.
Embodiment H6. The composition of Embodiment H5 containing no more than 0.2% of triglycerides by weight.
Embodiment H7. The composition of Embodiment H6 containing no more than 0.1 % of triglycerides by weight.
Embodiment H8. The composition according to claim 1 or any one of the preceding Embodiments containing no more than 10% of alkoxylated fatty acids by weight.
Embodiment H9. The composition of Embodiment H8 containing no more than 5% of alkoxylated fatty acids by weight.
Embodiment H10. The composition of Embodiment H9 containing no more than 2% of alkoxylated fatty acids by weight.
Embodiment H11. The composition of Embodiment H10 containing no more than 1% of alkoxylated fatty acids by weight.
Embodiment H12. The composition of Embodiment H11 containing no more than 0.5% of alkoxylated fatty acids by weight.
Embodiment H13. The composition of Embodiment H12 containing no more than 0.2% of alkoxylated fatty acids by weight.
Embodiment H14. The composition of Embodiment H13 containing no more than 0.1 % of alkoxylated fatty acids by weight.

The above Embodiments of the invention can be combined in any manner within the scope of claim 1. An example of such combination is the composition according to claim 1 comprising by weight from 2 to 8% of nicosulfuron and from 0 to 2% of thifensulfuron-methyl (as component (a)), from 30 to 50% of polyethoxylated soybean oil (as component (d)), from 35 to 65% of methylated soybean oil (as component (e)), and from 0.5 to 5% of a clay and from 0.5 to 4% of one or more lignosulfonates (as component (f)). Another example of such combination is the composition according to claim 1 comprising by weight from 2 to 8% of nicosulfuron and from 0 to 2% of thifensulfuron-methyl (as component (a)), from 30 to 50% of polyethoxylated soybean oil provided by combining in a weight ratio from 2 : 1 to 1 : 2 two polyethoxylated soybean oil constituents wherein the average ethoxylation of one polyethoxylated soybean oil constituent is 10 ethoxyl units and the average ethoxylation of the other polyethoxylated soybean oil constituent is 30 ethoxyl units (as component (d)), from 35 to 65% of methylated soybean oil (as component (e)), and from 0.5 to 5% of a clay and from 0.5 to 4% of one or more lignosulfonates (as component (f)). A further example of such combination is the composition according to claim 1 comprising by weight from 2 to 8% of nicosulfuron and from 0 to 2% of thifensulfuron-methyl (as component (a)), from 30 to 50% of polyethoxylated soybean oil having a bimodal distribution of number of ethoxyl units per molecule wherein the modes differ by at least 8 ethoxyl units (as component (d)), from 35 to 65% of methylated soybean oil (as component (e)), and from 0.5 to 5% of a clay and from 0.5 to 4% of one or more lignosulfonates (as component (f)).

Of note is a composition according to claim 1 wherein the ratio of weight of component (c), when present, to weight of component (a) is in the range from 10:1 to 1:10.

Also of note is a single liquid-phase herbicide composition according to claim 1 consisting essentially of by weight
(1) from 0.1 to 30% of one or more sulfonylurea herbicides selected from azimsulfuron, bensulfuron-methyl, chlorimuron-ethyl, chlorsulfuron, ethametsulfuron-methyl, flupyrsulfuron-methyl, metsulfuron-methyl, nicosulfuron, rimsulfuron, sulfometuron-methyl, thifensulfuron-methyl, tribenuron-methyl, and triflusulfuron-methyl, and salts thereof; and
(2) from 10% to 99.9% of one or more polyalkoxylated triglycerides wherein no more than 50% by weight of the fatty acid-derived moieties in the polyalkoxylated triglycerides are derived from hydroxy fatty acids; and optionally
(3) from 0 to 40% of one or more biologically active agents other than sulfonylurea herbicides;
(4) from 0 to 30% of one or more herbicide safeners;
(5) from 0 to 89.9% of one or more fatty acid esters of C₁-C₄ alkanols; and
(6) from 0 to 70% of one or more additional formulating ingredients.

The above described Embodiments A1 through H14 and their combinations also relate to this single liquid-phase herbicide composition described as "consisting essentially of" the stated ingredients. An example of this composition more particularly described using combinations of Embodiments A1 through H14 is a single liquid-phase composition consisting essentially by weight from 2 to 8% of nicosulfuron and from 0 to 2% of thifensulfuron-methyl (as component (1)), from 30 to 50% of polyethoxylated soybean oil (as component (2)), from 35 to 65% of methylated soybean oil (as component (5)), and from 0.5 to 5% of a clay and from 0.5 to 4% of one or more lignosulfonates (as component (6)). Another example is the composition consisting essentially of by weight from 2 to 8% of nicosulfuron and from 0 to 2% of thifensulfuron-methyl (as component (1)), from 30 to 50% of polyethoxylated soybean oil provided by combining in a weight ratio from 2 : 1 to 1 : 2 two polyethoxylated soybean oil constituents wherein the average ethoxylation of one polyethoxylated soybean oil constituent is 10 ethoxyl units and the average ethoxylation of the other polyethoxylated soybean oil constituent is 30 ethoxyl units (as component (2)), from 35 to 65% of methylated soybean oil (as component (5)), and from 0.5 to 5% of a clay and from 0.5 to 4% of one or more lignosulfonates (as component (6)). A further example is the composition consisting essentially of by weight from 2 to 8% of nicosulfuron and from 0 to 2% of thifensulfuron-methyl (as component (1)), from 30 to 50% of polyethoxylated soybean oil having a bimodal distribution of number of ethoxyl units per molecule wherein the modes differ by at least 8 ethoxyl units (as component (2)), from 35 to 65% of methylated soybean oil (as component (5)), and from 0.5 to 5% of a clay and from 0.5 to 4% of one or more lignosulfonates (as component (6)).

This invention provides a single liquid-phase composition comprising one or more sulfonylurea herbicides as defined in claim 1 (i.e. component (a)) in an amount from 0.1 to 30%, more typically from 0.5 to 15% or from 2% to 10% or 12%, and most typically from 4% to 8% by weight of the composition. Sulfonylurea herbicides are well known in the art. Sulfonylurea herbicide molecules comprise a sulfonylurea moiety (-S(O)₂NHC(O)NH(R)-). Sulfonylurea herbicides can be in the form of the free acid or a salt. In the free acid form the sulfonamide nitrogen on the bridge is not deprotonated (i.e. -S(O)₂NHC(O)NH(R)-), while in the salt form the sulfonamide nitrogen atom on the bridge is deprotonated (i.e. -S(O)₂N^{⊖}C(O)NH(R)-), and a cation is present, typically of an alkali metal or alkaline earth metal, most commonly sodium or potassium. Furthermore, certain crystal forms of sulfonylureas can accommodate inclusion of water molecules (i.e. to form a hydrate) or other small molecules such as lower (C₁-C₄) alkanols and ethers, such as 1,4-dioxane. Small molecules have molecular weights typically less than 200, more typically less than 150. Such sulfonylurea crystal forms containing water or other molecules are useful in the present invention, and the sulfonylureas in the presently claimed compositions include said crystal forms. Of particular note for the present single liquid-phase herbicide composition is the hydrated crystal form of nicosulfuron.

The following sulfonylurea herbicides are used for this invention: azimsulfuron (*N-*[[(4,6-dimethoxy-2-pyrimidinyl)amino]carbonyl]-1-methyl-4-(2-methyl-2*H*-tetrazol-5-yl)-1*H*-pyrazole-5-sulfonamide), bensulfuron-methyl (methyl 2-[[[[[(4,6-dimethoxy-2-pyrimidinyl)amino]carbonyl]amino]sulfonyl]methyl]benzoate), chlorimuron-ethyl (ethyl 2-[[[[(4-chloro-6-methoxy-2-pyrimidinyl)amino]carbonyl]amino]sulfonyl]benzoate), chlorsulfuron (2-chloro-*N*-[[(4-methoxy-6-methyl-1,3,5-triazin-2-yl)amino]carbonyl]-benzenesulfonamide), ethametsulfuron-methyl (methyl 2-[[[[[4-ethoxy-6-(methylamino)-1,3,5-triazin-2-yl]amino]carbonyl]amino]sulfonyl]benzoate), flupyrsulfuron-methyl (methyl 2-[[[[(4,6-dimethoxy-2-pyrimidinyl)amino]carbonyl]amino]sulfonyl]-6-(trifluoromethyl)-3-pyridinecarboxylate), metsulfuron-methyl (methyl 2-[[[[(4-methoxy-6-methyl-1,3,5-triazin-2-yl)amino]carbonyl]amino]sulfonyl]benzoate), nicosulfuron (2-[[[[(4,6-dimethoxy-2-pyrimidinyl)amino]carbonyl]amino]sulfonyl]-*N*,*N*-dimethyl-3-pyridinecarboxamide), rimsulfuron (*N*-[[(4,6-dimethoxy-2-pyrimidinyl)amino]carbonyl]-3-(ethylsulfonyl)-2-pyridinesulfonamide), sulfometuron-methyl (methyl 2-[[[[(4,6-dimethyl-2-pyrimidinyl)amino]carbonyl]amino]sulfonyl]benzoate), thifensulfuron-methyl (methyl 3-[[[[(4-methoxy-6-methyl-1,3,5-triazin-2-yl)amino]carbonyl]amino]sulfonyl]-2-thiophenecarboxylate), tribenuron-methyl (methyl 2-[[[[*N*-(4-methoxy-6-methyl-1,3,5-triazin-2-yl)-*N*-methylamino]carbonyl]amino]sulfonyl]benzoate), and triflusulfuron-methyl (methyl 2-[[[[[4-dimethylamino)-6-(2,2,2-trifluoroethoxy)-1,3,5-triazin-2-yl]amino]-carbonyl]amino]sulfonyl]-3-methylbenzoate), and salts thereof.

A wide variety of methods to prepare sulfonylureas are known in the extensive sulfonylurea herbicide art. The above named sulfonylureas are active ingredients in commercially available herbicide products and are described in The Pesticide Manual, Thirteenth Edition, C. D. S. Tomlin, ed., BCPC, Hampshire, UK, 2003, which is hereby incorporated by reference. Salts of sulfonylureas can include acid-addition salts with inorganic or organic acids such as hydrobromic, hydrochloric, nitric, phosphoric, sulfuric, acetic, butyric, fumaric, lactic, maleic, malonic, oxalic, propionic, salicylic, tartaric, 4-toluenesulfonic or valeric acids. Of greater importance are salts of sulfonylureas formed with organic bases (e.g., pyridine, ammonia, or triethylamine) or inorganic bases (e.g., hydrides, hydroxides, or carbonates of sodium, potassium, lithium, calcium, magnesium or barium). Preferred salts of sulfonylureas include lithium, sodium, potassium, triethylammonium, and quaternary ammonium salts. Salts of sulfonylureas can be prepared by a number of ways known in the art, including contact of a sulfonylurea with an acid or base, or using ion exchange with a sulfonylurea salt.

As already mentioned, certain crystal forms of sulfonylureas can include water and other small molecules within the crystal lattice. These crystal forms are typically prepared by crystallization of the sulfonylurea from a liquid medium containing the water or other small molecule or by contact of a sulfonylurea crystalline solid with the water or other small molecule. Of particular note is a composition of the present invention comprising a hydrated crystal form of nicosulfuron, wherein the nicosulfuron is the free acid. This hydrated crystal form of nicosulfuron can be prepared by heating a slurry of nicosulfuron in a mixture of water and ethyl acetate as described in U.S. Patent 5,202,439. The nicosulfuron used in the compositions of the Example Formulations was in the hydrate crystal form prepared by this method.

In mixtures with liquid carriers comprising polyalkoxylated triglycerides either alone or in admixture with fatty acid esters of C₁-C₄ alkanols, sulfonylureas as well as certain formulating ingredients such as lignosulfonate dispersants remain mostly undissolved, and thus the single liquid-phase compositions of the present invention are generally in the form of suspension concentrates.

The single liquid phase compositions of the present invention can comprise in addition to sulfonylurea herbicides up to 40% by weight of one or more other biologically active agents. Other biologically active agents may include herbicides other than sulfonylureas and may also include plant growth regulants, insecticides, insect antifeedants, miticides, nematocides, bactericides and fungicides, including both chemical and biological agents. As herbicide safeners serve to reduce the effect of herbicidally active agents, in the context of the present disclosure and claims, herbicide safeners are categorized separately from other biologically active agents. Most commonly, the other active biologically active agents are herbicides. The other herbicides include compounds that inhibit acetolactate synthase. Examples of herbicides include acetochlor, acifluorfen and its sodium salt, aclonifen, alachlor, alloxydim, ametryn, amicarbazone, aminopyralid, amitrole, anilofos, asulam, atrazine, beflubutamid, benazolin, benazolin-ethyl, bencarbazone, benfluralin, benfuresate, bensulide, bentazone, benzobicyclon, benzofenap, bifenox, bilanafos, bispyribac and its sodium salt, bromacil, bromobutide, bromofenoxim, bromoxynil, bromoxynil octanoate, butachlor, butafenacil, butamifos, butralin, butroxydim, butylate, cafenstrole, carbetamide, carfentrazone-ethyl, catechin, chlomethoxyfen, chloramben, chlorbromuron, chlorflurenolmethyl, chloridazon, chlorotoluron, chlorpropham, chlorthal-dimethyl, chlorthiamid, cinidon-ethyl, cinmethylin, clethodim, clodinafop-propargyl, clomazone, clomeprop, clopyralid, clopyralid-olamine, cloransulam-methyl, cumyluron, cyanazine, cycloate, cycloxydim, cyhalofop-butyl, 2,4-D and its butotyl, butyl, isoctyl and isopropyl esters and its dimethylammonium, diolamine and trolamine salts, daimuron, 2,4-DB and its dimethylammonium, potassium and sodium salts, dazomet, desmedipham, desmetryn, dicamba and its diglycolammonium, dimethylammonium, potassium and sodium salts, dichlobenil, dichlorprop, diclofop-methyl, diclosulam, difenzoquat metilsulfate, diflufenican, diflufenzopyr, dimefuron, dimepiperate, dimethachlor, dimethametryn, dimethenamid, dimethenamid-P, dimethipin, dinitramine, dinoterb, diphenamid, diquat dibromide, dithiopyr, diuron, endothal, EPTC, esprocarb, ethalfluralin, ethofumesate, ethoxyfen, etobenzanid, fenoxaprop-ethyl, fenoxaprop-P-ethyl, fentrazamide, fenuron, fenuron-TCA, flamprop-methyl, flamprop-M-isopropyl, flamprop-M-methyl, florasulam, fluazifop-butyl, fluazifop-P-butyl, fluazolate, flucarbazone, fluchloralin, flufenacet, flufenpyr, flufenpyrethyl, flumetsulam, flumichlorac-pentyl, flumioxazin, fluometuron, fluoroglycofen-ethyl, flupoxam, flurenol, flurenol-butyl, fluridone, flurochloridone, fluroxypyr, flurtamone, fluthiacet-methyl, fomesafen, glufosinate and its ammonium salt, glyphosate and its salts such as ammonium, isopropylammonium, potassium, sodium (including sesquisodium) and trimesium (alternatively named sulfosate), haloxyfop-etotyl, haloxyfop-methyl, hexazinone, imazamethabenz-methyl, imazamox, imazapic, imazapyr, imazaquin, imazaquin-ammonium, imazethapyr, indanofan, ioxynil, ioxynil octanoate, isoxynil-sodium, isoproturon, isouron, isoxaben, isoxaflutole, isoxachlortole, lactofen, lenacil, linuron, MCPA and its salts (e.g., MCPA-dimethylammonium, MCPA-potassium and MCPA-sodium, esters (e.g., MCPA-2-ethylhexyl, MCPA-butotyl) and thioesters (e.g., MCPA-thioethyl), MCPB and its salts (e.g., MCPB-sodium) and esters (e.g., MCPB-ethyl), mecoprop, mecoprop-P, mefenacet, mefluidide, mesotrione, metamifop, metamitron, metazachlor, methabenzthiazuron, methyldymron, metobenzuron, metobromuron, metolachlor, S-metolachlor, metosulam, metoxuron, metribuzin, molinate, monolinuron, naproanilide, napropamide, naptalam, neburon, norflurazon, orbencarb, oryzalin, oxadiargyl, oxadiazon, oxaziclomefone, oxyfluorfen, paraquat dichloride, pebulate, pendimethalin, penoxsulam, pentanochlor, pentoxazone, pethoxamid, phenmedipham, picloram, picloram-potassium, picolinafen, pinoxaden, piperophos, pretilachlor, prodiamine, profoxydim, prometon, prometryn, propachlor, propanil, propaquizafop, propazine, propham, propisochlor, propoxycarbazone, propyzamide, prosulfocarb, pyraclonil, pyraflufen-ethyl, pyrasulfotole, pyrazogel, pyrazolynate, pyrazoxyfen, pyribenzoxim, pyributicarb, pyridate, pyriftalid, pyriminobac-methyl, pyrimisulfan, pyrithiobac, pyrithiobac-sodium, pyroxasulfone, pyroxsulam, quinclorac, quinmerac, quinoclamine, quizalofop-ethyl, quizalofop-P-ethyl, quizalofop-P-tefuryl, sethoxydim, siduron, simazine, simetryn, sulcotrione, sulfentrazone, 2,3,6-TBA, tebutam, tebuthiuron, tefuryltrione (AVH-301; 2-[2-chloro-4-(methylsulfonyl)-3-[[(tetrahydro-2-furanyl)methoxy]methyl]benzoyl]-1,3-cyclohexanedione), tembotrione, tepraloxydim, terbacil, terbumeton, terbuthylazine, terbutryn, thenylchlor, thiazopyr, thiencarbazone, thiobencarb, tiocarbazil, topramezone, tralkoxydim, tri-allate, triaziflam, triclopyr, triclopyr-butotyl, triclopyr-triethylammonium, tridephane, trietazine, trifluralin and vernolate. Of note are compositions where the weight ratio of other biologically active agents (i.e. component (b)) to sulfonylurea herbicides (i.e. component (a)) is between 1:100 and 100:1.

The single liquid phase compositions of the present invention can also comprise up to 30% by weight of one or more herbicide safeners as component (c). In the context of the present disclosure and claims, herbicide safeners are chemical compounds that have little biological activity as described for component (b) and instead reduce plant injury caused by herbicides, which may include the sulfonylureas of component (a) and also herbicidally active agents in component (b). Some biologically active agents, including herbicides (e.g., hormonal herbicides such as 2,4-D and dicamba), can under particular circumstances reduce the phytotoxicity of the sulfonylureas of component (a); as these agents have biological activity besides safening, they are included in component (b) instead of component (c) in the context of the present disclosure and claims. Herbicide safeners are most typically used to selectively protect crop plants from herbicides applied to agricultural fields. Illustrative herbicide safeners include benoxacor, BCS (1-bromo-4-[(chloromethyl)sulfonyl]benzene), cloquintocet and its salts and esters (e.g., cloquintocet-mexyl), cyometrinil, dichlormid, 2-(dichloromethyl)-2-methyl-1,3-dioxolane (MG 191), fenchlorazole and its salts and esters (e.g, fenchlorazole-ethyl), fenclorim, flurazole, fluxofenim, furilazole, isoxadifen and its salts and esters (e.g., isoxadifen-ethyl), mefenpyr and its salts and esters (e.g., mefenpyr-diethyl), methoxyphenone ((4-methoxy-3-methylphenyl)(3-methylphenyl)methanone), naphthalic anhydride and oxabetrinil. Of note are compositions where the weight ratio of the one or more herbicide safeners (i.e. component (c)) to sulfonylurea herbicides (i.e. component (a)) is between 1:100 and 100:1.

The single liquid phase compositions of the present invention comprise from 10 to 99.9% by weight of one or more polyalkoxylated triglycerides wherein no more than 50% by weight of the fatty acid-derived moieties in the polyalkoxylated triglycerides are derived from hydroxy fatty acids. Often the present compositions comprise at least 20%, 25%, 30% or 35%, and not more than 95%, 70%, 60%, 50% or 45% by weight of these polyalkoxylated triglycerides. Typically the present compositions comprise from 15 to 95%, more typically from 35 to 50%, and most typically from 35 to 45% by weight of these polyalkoxylated triglycerides wherein no more than 50% by weight of the fatty acid-derived moieties in the polyalkoxylated triglycerides are derived from hydroxy fatty acids. Polyalkoxylated triglycerides limited in hydroxy fatty acid-derived content thus constitute an essential component of the liquid carrier in the present compositions.

Polyalkoxylated triglycerides (also known as alkoxylated triglycerides, alkoxylated fatty acid glycerides, and polyalkoxylated fatty acid glycerides) are often regarded as "semi-natural" surfactants, as they are usually made from alkoxylation (e.g., ethoxylation or propoxylation) of glycerol fatty acid esters (i.e. fatty acid esters of glycerol) of natural origin such as vegetable oils (many of which are also referred to as seed oils). Alkoxylation refers to the insertion of oxyethylene units having the formula "-OCH₂CH₂-", which may be optionally substituted with alkyl, (i.e. alkoxyl units) into ester molecules. The more specific terms "ethoxylation" and "propoxylation" refer, respectively, to insertion of oxyethylene units and oxypropylene (i.e. methyl-substituted oxyethylene) units. Polyalkoxyated triglycerides are thus generally recognized to comprise oxyethylene units, optionally alkyl-substituted, interposed between the glycerol backbone and the fatty acid-derived ester substituents. More specifically, polyethoxylated triglycerides comprise unsubstituted oxyethylene units. Accordingly, hydroxy fatty acid triglycerides such as castor oil or hydrogenated castor oil in which only the hydroxy functions on the fatty acid-derived (e.g., ricinoleic acid) moieties are alkoxylated do not meet the requirement of optionally alkyl-substituted oxyethylene units interposed between the glycerol backbone and the fatty acid-derived ester substituents, and these distinctly different compounds are not considered to be polyalkoxylated triglycerides in the context of the present disclosure and claims. In a polyalkoxylated triglyceride molecule, chains of optionally alkyl-substituted oxyethylene units are interposed between the glycerol backbone and one or more of the three fatty acid-derived ester substituents. Polyalkoxylated triglycerides typically contain from 3 to 100, more typically from 5 to 50 and most typically from 10 to 30, units derived from one or more alkylene oxides such as ethylene oxide or propylene oxide. Typically the units are derived from ethylene oxide, propylene oxide or combinations thereof, and most typically the units are derived from ethylene oxide.

In one method, glycerol fatty acid esters (e.g., vegetable oils) are polyethoxylated in a process typically involving heating with a catalytic amount of an alkali metal hydroxide or alkoxide, optionally a catalytic amount of an alcohol (e.g., glycerol), and an amount of ethylene oxide depending upon the extent of ethoxylation desired. These conditions apparently ethoxylate glycerol-based alcohol moieties with ethylene oxide to form ethoxylated species (typically comprising multiple ethylene oxide-derived units in a chain), which condense at the terminal end of the ethylene oxide-derived chain with carboxylic moieties to form ester linkages (e.g., through base-catalyzed transesterification), thereby liberating further glycerol-based alcohol moieties, which are then ethoxylated and condensed with carboxylic moieties to form esters. Ethoxylation continues until the quantity of ethylene oxide added is consumed. Under these conditions, hydroxyl groups on alkyl or alkenyl chains of a carboxylic acid (e.g., ricinoleic acid in castor oil) may also be ethoxylated. Preparation of ethoxylated fatty acid esters (including polyethoxylated triglycerides) by this method are described in GB Patent 1,050,497 and U.S. Patent 6,103,770. Although this method is useful for preparing the polyalkoxylated triglyceride component for the present composition, alkoxylation of fatty esters using metal hydroxides or alkoxides can leave a significant portion of the starting fatty esters unalkoxylated, as is reported by Cox and Werasooriya, *Journal of the American Oil Chemists' Society* **1997**, *74*(7), 847-859. Furthermore, depending upon reaction conditions, significant amounts of alkoxylated fatty acid (also known as fatty acid alkoxylate) impurities can form.

In one embodiment of the present composition the amount of unmodified (e.g., unalkoxylated) triglycerides is minimized, so as to allow maximizing other liquid phase components more effective in the composition such as polyalkoxylated triglycerides and optionally, fatty acid esters of C₁-C₄ alkanols. Minimizing unmodified triglycerides in the present composition requires minimizing the amount of unmodified triglyceride impurities in the polyalkoxylated triglyceride product used to provide component (d). Therefore preferred polyalkoxylated triglyceride products for providing component (d) are those prepared by processes minimizing residual unmodified triglycerides. An ethoxylation process minimizing residual unmodified triglycerides involves heating glycerol fatty acid esters (i.e. triglycerides) with ethylene oxide in the presence of a calcined or hydrophobicized (e.g., fatty-acid-modified) hydrotalcite heterogeneous catalyst as described in U.S. Patent 5,292,910 and PCT Patent Publication WO 90/13533, particularly in the presence of a co-catalyst (e.g., lithium hydroxide, alkaline earth metal salts, tin salts) as described in U.S. Patent 6,008,392. Ethoxylation using a calcined or hydrophobicized hydrotalcite heterogeneous catalyst also minimizes formation of alkoxylated (e.g., ethoxylated) fatty acid impurities. Therefore of note is a composition of the present invention wherein the polyalkoxylated triglycerides of component (d) are prepared by the method of U.S. Patent 5,292,910 and PCT Patent Publication WO 90/13533, and particularly U.S. Patent 6,008,392. Cox and Werasooriya, Journal of the American Oil Chemists' Society 1997, 74(7), 847-859 discloses another ethoxylation process minimizing residual unmodified triglycerides by use of a calcium and aluminum alkoxyethoxylate catalyst prepared as described in U.S. Patent 4,775,653.

In each of the above described alkoxylation processes, glycerol fatty acid esters can be propoxylated by substituting propylene oxide for all or part of the ethylene oxide in alkoxylation procedures. Furthermore, glycerol fatty acid esters can be alkoxylated using other alkylene oxides (e.g., butylene oxide).

The fatty acid-derived portions of polyalkoxylated triglyceride molecules thus come from the fatty acid-derived portions of the triglyceride starting materials (i.e. glycerol fatty acid esters such as vegetable oil). The fatty acid portions of the triglycerides consist of a carbonyl moiety bound to a hydrocarbon chain, which can be unbranched or branched, but is typically unbranched in natural sources. In the compositions of the present invention, polyalkoxylated triglycerides in which the fatty acid portions are unbranched have physical and biological properties enabling them to function well, and thus they are preferred in view of their low cost from natural sources. The hydrocarbon chain can be saturated or unsaturated; typically the hydrocarbon chain is saturated (i.e. alkyl) or contains 1 or 2 carbon-carbon double bonds (i.e. alkenyl). However, triglycerides in fish oils comprise fatty acid moieties having as many as 6 carbon-carbon double bonds. Polyalkoxylated triglycerides formed from fatty acids containing an odd number of carbon atoms (i.e. even number of carbon atoms in the hydrocarbon chain) are useful in the compositions of the present invention as well as polyalkoxylated triglycerides formed from fatty acids containing an even number of carbon atoms (i.e. odd number of carbon atoms in the hydrocarbon chain). However, fatty acids obtained from natural sources typically contain an even number of carbon atoms, and therefore polyalkoxylated glycerides containing fatty acid-derived moieties containing an even number of carbon atoms are preferred for reason of commercial availability and cost.

Fatty acids contain at least 4 carbon atoms and are limited to 22 (rarely 24) carbon atoms from natural sources. As fatty acids obtained from natural sources typically contain 8 to 22 carbon atoms, more typically 10 to 22 carbon atoms, esters of these fatty acids are preferred for reason of commercial availability and cost. The C₁₀-C₂₂ fatty acid esters with an even number of carbon atoms include, for example, erucic acid, lauric acid, palmitic acid, stearic acid, oleic acid, linoleic acid and linolenic acid. The hydrophilic-lipophilic balance (HLB) of polyalkoxylated triglycerides is typically decreased by shortening fatty acid length and/or increasing unsaturation of component fatty acid moieties, or alternatively, increased by lengthening fatty acid length and/or increasing saturation of component fatty acid moieties.

Glycerol fatty acid ester compositions obtained from natural sources (e.g., seed oils) typically consist of fatty acids having a range of chain lengths and different degrees of unsaturation. Polyalkoxylated triglyceride compositions derived from such glycerol fatty acid ester mixtures are useful in the compositions of the present invention without need to first separate the fatty acid esters. Indeed polyalkoxylated triglycerides derived from not just a single fatty acid compound but instead a variety of fatty acids differing in chain length and/or degree of unsaturation (or saturation) have superior physical properties (e.g., being liquids rather than waxy solids) making them preferable for the present compositions. Moreover, polyalkoxylated triglycerides derived from not just one, but a variety of fatty acids provide a mixture of molecular moieties contributing a range of component hydrophilic-lipophilic balance (HLB) values, which contribute to the overall hydrophilic-lipophilic balance of component (d) in the composition. Fatty acid moieties providing lower HLB component values promote defoaming, and fatty acid moieties providing higher HLB component values promote oil-in-water emulsification (when the composition is added to water in a spray tank), so including a variety of fatty acid moieties in polyalkoxylated triglyceride molecules can help achieve both low susceptibility to foaming and excellent oil-in-water emulsification. A range of component HLB values, instead of a single component HLB value (from only one fatty acid moiety), in polyalkoxylated triglyceride molecules is believed to make polyalkoxylated triglycerides comprising a variety of fatty acid moieties particularly effective as emulsifiers in the present composition (e.g., producing small emulsion droplets on dilution with water), helping provide noteworthy rainfastness and herbicidal activity of the sulfonylurea active ingredient. Accordingly in the composition of the present invention preferably no more than 90% by weight of the fatty acid-derived moieties of the polyalkoxylated triglycerides of component (d) is derived from any one fatty acid compound (i.e. at most 90% by weight may be derived from a single fatty acid compound, and at least about 10% by weight must be derived from one or more other fatty acid compounds). More preferably, no more than 85%, 80%, 70% or 60% by weight, and most preferably, no more than 55% of the fatty acid-derived moieties of the polyalkoxylated triglycerides of component (d) is derived from any one fatty acid. Naturally occurring triglycerides, such as seed and fruit oils and fish oils, provide such mixtures of fatty acids; seed oils of common varieties (i.e. not genetically selected or modified to change fatty acid composition) of cotton, corn (maize) and sunflower typically are not derived from more than 60% of any one fatty acid, and seed oils of common varieties of coconut, linseed (flax), oil palm (both fruit and kernel), peanut, rapeseed and soybean typically are not derived from more than 55% of any one fatty acid. Varieties selected or modified to change fatty acid composition typically contain higher percentages of a particular fatty acid moiety, but still generally not more than 80 to 85% by weight.

Seed and fruit oils of sunflower, rapeseed, olive, corn (maize), soybean, cotton and linseed (flax) are considered advantageous for preparing polyalkoxylated glycerides for the present compositions, because these oils do not contain significant amounts of hydroxy fatty acid groups. As already noted, "hydroxy fatty acid" means a fatty acid comprising at least one hydroxy (-OH) substituent attached to an alkyl or alkenyl moiety of the fatty acid. Castor oil comprises triglycerides of fatty acids typically including 87% of ricinoleic acid, an 18-carbon carboxylic acid having a double bond in the 9-10 position and a hydroxyl group attached to the 12th carbon. Inserting alkyl-substituted oxyethylene units between the glycerol backbone and the fatty acid-derived ester substituents of castor oil or hydrogenated castor oil retains the hydroxy groups on the fatty acid-derived substituents on glycerol. Even if the hydroxy groups of the hydroxy fatty acid-derived moieties are also alkoxylated, new hydroxy groups occur at the end of the polyalkoxyl chain. Hydroxyl groups can promote hydrolysis or other decomposition of sulfonylurea molecules of component (a). Therefore the polyalkoxylated triglycerides in the present compositions are preferably not prepared from hydroxy fatty acid esters of glycerol, such as castor oil or hydrogenated castor oil. Indeed according to the present invention no more that 50% by weight of the fatty acid-derived moieties in the polyalkoxylated triglycerides are derived from hydroxy fatty acids. This precludes component (d) from consisting of just polyalkoxylated castor oil and/or polyalkoxylated hydrogenated castor oil (in which 87% of the fatty acid-derived moieties are derived from hydroxy fatty acids). As hydroxy fatty acid-derived moieties are best avoided to achieve good stability of sulfonylurea herbicides in the present compositions, component (d) preferably consists of at least 50%, more preferably at least 90%, more preferably at least 99% by weight of one or more polyalkoxylated triglycerides other than polyalkoxylated castor oil and polyalkoxylated hydrogenated castor oil. Because 87% of the fatty acid-derived moieties in castor oil are derived from hydroxy fatty acids, preferences for at least 50%, 90% or 99% of polyalkoxylated triglycerides other that castor oil correspond to preferences for no more than 44%, 9% or 1%, respectively, by weight of fatty acid-derived moieties derived from hydroxy fatty acids. Most preferably, component (d) does not contain any polyalkoxylated castor oil or polyalkoxylated hydrogenated castor oil. Also, preferably no more than 10% and more preferably no more than 5%, 2%, 1% or 0.1% by weight of the fatty acid-derived moieties in the polyalkoxylated triglycerides of component (d) are derived from hydroxy fatty acids. Most preferably, none of the fatty acid-derived moieties in the polyalkoxylated triglycerides of component (d) are derived from hydroxy fatty acids.

Compositions of the present invention comprising polyalkoxylated triglycerides prepared from seed and fruit oils not containing triglycerides of hydroxy fatty acids (e.g., soybean oil) have been discovered to provide remarkably good chemical stability to sulfonylurea herbicide active ingredients (e.g., nicosulfuron). The stability provided by these polyalkoxylated triglycerides in the present compositions may be sufficient for prolonged storage under hot ambient conditions even without including additional stabilizers in the compositions.

Although hydroxy fatty acid moieties are preferably avoided in the polyalkoxylated triglycerides of component (d), this still allows a wide range of other fatty acids. Typically at least 90% and more typically at least 95% by weight of the fatty acid-derived moieties of the polyalkoxylated triglycerides of component (d) is derived from fatty acid compounds selected from caprylic acid, capric acid, lauric acid, myristic acid, palmitic acid, palmitoleic acid, stearic acid, oleic acid, linoleic acid, linolenic acid, stearidonic acid, arachidic (eicosanoic) acid, gadoleic (eicosenoic) acid, timnodonic (eicosapentaenoic) acid, behenic acid, erucic acid, docosahexaenoic acid, lignoceric acid and nervonic acid. Preferably the fatty acid moieties are derived from inexpensive, commercially available seed and fruit oils. Therefore preferably at least 90% by weight of the fatty acid moieties of the polyalkoxylated triglycerides of component (d) is derived from caprylic acid, capric acid, lauric acid, myristic acid, palmitic acid, palmitoleic acid, stearic acid, oleic acid, linoleic acid, linolenic acid, arachidic acid, gadoleic acid and erucic acid. Polyalkoxylated triglycerides comprising moieties derived from palmitic acid, stearic acid, oleic acid, linoleic acid and linolenic acid have been discovered to work well in the present compositions to provide both formulation stability and remarkable herbicidal efficacy. Therefore in the present compositions, preferably at least 40%, more preferably at least 80% or 90%, and most preferably at least 95% by weight of the fatty acid-derived moieties of the polyalkoxylated triglycerides of component (d) is derived from fatty acid compounds selected from palmitic acid, stearic acid, oleic acid, linoleic acid and linolenic acid. The fatty acid composition of oils from many seeds and fruits contains at least ((STE)) 40% of palmitic acid, stearic acid, oleic acid, linoleic acid and linolenic acid. These seeds and fruits include soybean, rapeseed, corn, peanut, olive, oil palm (fruit), linseed, sunflower and cotton. Oils from soybean, corn, olive, oil palm (fruit), linseed, sunflower, cotton and certain varieties of rapeseed (e.g., Canola™) obtain at least 95% of their fatty acid moiety content from palmitic acid, stearic acid, oleic acid, linoleic acid and linolenic acid. To limit susceptibility to oxidation, preferably no more than 15% by weight of the fatty acid moieties are derived from polyunsaturated fatty acids (i.e. having 3 or more double bonds between carbon atoms).

Of note in component (d) are polyalkoxylated triglycerides produced from glycerol fatty acid esters obtained from plants, including seed and fruit oils of sunflower, rapeseed, olive, corn (maize), soybean, cotton and linseed (flax). Preferred for reasons including cost are polyalkoxylated triglycerides derived from soybean or rapeseed oil, and most preferably soybean oil. As already mentioned, soybean oil contains a mixture of saturated and unsaturated fatty acid groups mostly containing from 16 to 18 carbon atoms (e.g., palmitic, stearic, oleic, linoleic and linolenic acids). Seed oils of common varieties of soybean typically have a fatty acid composition wherein the predominant fatty acid (linoleic acid) is not more than 50% by weight of the fatty acid-derived moieties. In high oleic soybean varieties, nearly 80% by weight of the fatty acid-derived moieties in the oil may come from oleic acid. Typically the polyalkoxylated triglycerides derived from soybean oil are ethoxylated and contain from 3 to 100 units, more typically from 5 to 50, and most typically from 10 to 30 units derived from ethylene oxide. Polyethoxylated triglycerides derived from soybean oil and 10 to 30 moles of ethylene oxide per mole of triglyceride are available from Cognis Corp. in the products AGNIQUE SBO-10, described as POE 10 ethoxylated soybean oil (i.e. having about 10 moles of ethoxylation per mole of triglyceride), and AGNIQUE SBO-30, described as POE 30 ethoxylated soybean oil (i.e. having about 30 moles of ethoxylation per mole of triglyceride). Moles of ethoxylation per mole of triglyceride is the average number of ethoxyl units per (poly)ethoxylated triglyceride molecule. More generally, moles of alkoxylation per mole of triglyceride is the average number of alkoxyl units per (poly)alkoxylated triglyceride molecule.

As previously described, fatty acid moieties derived from a variety of fatty acid compounds, not just one fatty acid compound, in the polyalkoxylated triglyceride molecules of component (d) are believed to make these polyalkoxylated triglycerides particularly effective as emulsifiers in the present composition. Furthermore, including in component (d) polyalkoxylated triglyceride molecules having substantially differing numbers of alkoxyl units can be desirable. Not only does varying the relative amounts of polyalkoxylated triglyceride molecules having differing numbers of alkoxyl units allow optimizing the overall HLB value of component (d), but including polyalkoxylated triglycerides with substantially differing numbers of alkoxyl units can improve the effectiveness of component (d) in promoting emulsification of the present composition when diluted with water.

Accordingly, in one embodiment of the present composition, component (d) is provided by combining in a weight ratio from 4 : 1 to 1 : 4 two polyalkoxylated triglyceride constituents having average alkoxylation differing by at least 5 alkoxyl units. In this embodiment, the average alkoxylations of the two polyalkoxylated triglyceride constituents typically differ by at least 10 alkoxyl units, more typically by at least 15 alkoxyl units, and most commonly by 20 alkoxyl units. Typically, the average alkoxylations of the two polyalkoxylated triglyceride constituents differ by not more than 40 alkoxyl units, more typically not more than 30 alkoxyl units, and most typically by not more than 25 alkoxyl units. In this description, "polyalkoxylated triglyceride constituent" refers to a composition of polyalkoxylated triglyceride molecules in which the composition can be described as having a certain average number of alkoxyl units per polyalkoxylated triglyceride molecule (resulting from the number of moles of alkoxylation per mole of triglyceride). Typically in a polyalkoxylated triglyceride constituent the proportions of molecules having each number of alkoxyl units are in a unimodal distribution (i.e. one number of alkoxyl units per molecule has the greatest occurrence to form a maximum in the distribution (known in the art of statistics as the "mode"), and greater or lesser number of alkoxyl units per molecule are in progressively lesser proportions). The most frequent number of alkoxyl units per molecule in the distribution (i.e. the mode) is often similar to, but is not always identical to, the average alkoxylation number of the polyalkoxylated triglyceride constituent. Two constituents having disparate average alkoxylations also typically have correspondingly disparate modes in their unimodal distributions of number of alkoxyl units. Combining these two constituents provides a polyalkoxylated triglyceride composition having a bimodal distribution (i.e. two maxima occur in the distribution) in the number of alkoxyl units per molecule. In the context of the present disclosure and claims these two maxima are referred to as "modes". Typically the arithmetic difference between the two modes in a bimodal distribution of the combination (i.e. mixture) of two constituents is similar (but may be slightly less than) the difference between the modes in the unimodal distribution of the separate constituents.

Generally a polyalkoxylated triglyceride composition having a bimodal distribution of number of alkoxyl units per molecule has a more uniformly broad range (i.e. flatter distribution) of number of alkoxyl units per molecule than the individual constituent polyalkoxylated triglyceride compositions having unimodal distributions which can be considered to form the bimodal distribution. As diversity of number of alkoxyl units per polyalkoxylated triglyceride molecule may improve the aqueous emulsification and herbicidal utility of the present composition, in a related embodiment, component (d) is a polyalkoxylated triglyceride composition (subject to limitations such as relating to hydroxy fatty acid moieties) having a bimodal distribution of number of alkoxyl units per molecule wherein the modes differ by at least 4 alkoxyl units, more typically by at least 8 alkoxyl units, more typically by at least 16 alkoxyl units, and most commonly by 20 alkoxyl units. In this embodiment the modes typically differ by no more than 40 alkoxyl units, more typically by no more than 30 alkoxyl units, and most typically by no more than 25 alkoxyl units.

Component (d) of the present composition can also be formed from more than two constituents, each having unimodal distributions with disparate modes, to provide multimodal distribution having more than two modes. Therefore in another embodiment of the present composition, component (d) is a polyalkoxylated triglyceride composition (subject to limitations such as relating to hydroxy fatty acid moieties) having a multimodal distribution of number of alkoxyl units per molecule wherein at least two modes differ by at least 4 alkoxyl units, more typically by at least 8 alkoxyl units, more typically by at least 16 alkoxyl units, and most commonly by 20 alkoxyl units. In this embodiment the highest alkoxyl unit mode typically differs from the lowest alkoxyl unit mode by no more than 40 alkoxyl units, more typically by no more than 30 alkoxyl units, and most typically by no more than 25 alkoxyl units. The expression "highest alkoxyl unit mode" refers to the mode with the highest number of alkoxyl units; "lowest alkoxyl unit mode" refers to the mode with the lowest number of alkoxyl units (among the modes in the distribution).

In both the bimodal and multimodal embodiments the lowest alkoxyl unit mode is typically at least 4 alkoxyl units, more typically at least 6 alkoxyl units, most typically at least 8 alkoxyl units, and most commonly 10 alkoxyl units. The highest alkoxyl unit mode is typically not more than 50 alkoxyl units, more typically not more than 40 alkoxyl units, most typically not more than 35 alkoxyl units, and most commonly 30 alkoxyl units.

To achieve different average alkoxylation and different mode in the alkoxy unit number distribution, a constituent is typically prepared separately from the other constituent or constituents by using correspondingly different ratios of moles of alkoxylation per mole of triglyceride. AGNIQUE SBO-10 and AGNIQUE SBO-30 are noteworthy examples of polyalkoxylated (more specifically, polyethoxylated) triglyceride constituents having an average of 10 or 30 alkoxyl (ethoxyl) units respectively, and thus differing by 20 alkoxyl (ethoxyl) units. Commonly the two polyalkoxylated triglyceride constituents having different average alkoxylation or different modes in the alkoxy unit number distribution are in a weight ratio from 3 : 1 to 1 : 3, more commonly from 2 : 1 to 1 : 2, and most commonly from 3 : 2 to 2 : 3 (e.g., about 1 : 1).

In addition to the polyalkoxylated triglycerides of component (d), the liquid carrier in the present compositions optionally comprises one or more fatty acid esters of C₁-C₄ alkanols as component (e). The polyalkoxylated triglycerides of component (d) have non-ionic surfactant properties making them effective as emulsifiers of component (e) when this component is present. However, component (e) is not necessary for the composition to form an emulsion on dilution with water, because the polyalkoxylated triglycerides of component (d) also have self-emulsifying properties.

Besides causing the formation of emulsions when the present compositions are diluted with water prior to spraying, the polyalkoxylated triglycerides may also facilitate effective contact of the one or more sulfonylurea herbicides (i.e. component (a)) with the vegetation to be controlled. Polyalkoxylated triglycerides wherein no more than 50% by weight of the fatty acid-derived moieties in the polyalkoxylated triglycerides are derived from hydroxy fatty acids have been discovered to provide stable single liquid-phase formulations that have consistently high herbicidal activity when diluted with water and sprayed on weeds. The present composition is noteworthy for such beneficial properties as good stability of the sulfonylurea active ingredient and resistance to settling of suspended ingredients in the composition, facile pourability of the composition (for dispensing), formation of a stable emulsion on dilution with water (e.g., small size of emulsion droplets suspended in water), low susceptibility of the resulting aqueous emulsion to foaming, rainfastness (resistance to wash off) of active ingredient after application and drying of the water-diluted emulsion, high herbicidal efficacy for controlling weeds, and safety to crop plants.

The liquid carrier of the single liquid-phase composition of the present invention may also comprise one or more fatty acid esters of C₁-C₄ alkanols as component (e) in an amount of from 0 to 89.9% by weight of the composition. Because the polyalkoxylated triglycerides of component (d) have properties allowing them to function as a self-emulsifying liquid carrier, component (e) is optional, but typically best results, including rainfastness, are achieved when a substantial amount of one or more fatty acid esters of C₁-C₄ alkanols is present as component (e) in the liquid carrier. Furthermore, the relatively low viscosity of fatty acid esters of C₁-C₄ alkanols improves the pourability of the present composition, thus facilitating dispensing. Although when present, the amount of component (e) can be as low as 0.1 % of the composition by weight, for significant effect, the amount of component (e) is typically at least 10% of the composition by weight. Component (e) is more typically at least 20%, and even more typically at least 30%, 35% or 40%, and is often at least 50% of the composition by weight. Typically component (e) is no more than 75%, more typically no more than 65% of the composition by weight.

The C₁-C₄ alkanol-derived portions of the fatty acid esters can be unbranched (i.e. straight-chain) or branched, but are typically unbranched. For reasons including favorable physical properties, commercial availability and cost, preferably the fatty acid esters are fatty acids esterified with C₁-C₂ alkanols and more preferably C₁ alkanol (i.e. methanol). The fatty acid alkanol esters in a composition of the present invention can be derived from a mixture of alcohols (e.g., methanol and ethanol).

The fatty acid portions of the fatty acid esters of alkanols consist of a carbonyl moiety bound to a hydrocarbon chain, which can be unbranched or branched, but is typically unbranched in natural sources. The hydrocarbon chain can be saturated or unsaturated; typically the hydrocarbon chain is saturated (i.e. alkyl) or contains 1 or 2 (occasionally more) carbon-carbon double bonds (i.e. alkenyl). Fatty acid esters of alkanols formed from fatty acids containing an odd number of carbon atoms (i.e. even number of carbon atoms in the hydrocarbon chain) are useful in the compositions of the present invention as well as fatty acid esters of alkanols formed from fatty acids containing an even number of carbon atoms (i.e. odd number of carbon atoms in the hydrocarbon chain). However, fatty acids obtained from natural sources typically contain an even number of carbon atoms, and therefore esters of fatty acids containing an even number of carbon atoms are preferred for reason of commercial availability and cost.

As already mentioned, fatty acids contain at least 4 carbon atoms and are limited to 22 (rarely 24) carbon atoms from natural sources. Although alkanol esters of lower fatty acids (e.g., containing as few a 4 carbon atoms) are useful for the present compositions, alkanol esters of fatty acids having at least 8, more preferably at least 10, carbon atoms are preferred because of favorable physical properties (e.g., low volatility). Alkanol esters of lower fatty acids can be mixed with alkanol esters of higher fatty acids to decrease polarity, water solubility and volatility. As fatty acids obtained from natural sources typically contain 8 to 22 carbon atoms, more typically 10 to 22 carbon atoms, alkanol esters of these fatty acids are preferred for reason of commercial availability and cost.

As already mentioned, fatty acid compositions obtained from natural sources (e.g., seed oils) typically consist of fatty acids having a range of chain lengths and different degrees of unsaturation. Alkanol fatty acid ester compositions (i.e. compositions comprising fatty acid esters of alkanols) derived from such fatty acid mixtures can be useful in the compositions of the present invention without need to first separate the fatty acid esters. For reason of cost, not separating the fatty acid esters is preferred. Suitable alkanol fatty acid ester compositions obtained from plant-derived starting materials include seed and fruit oils of sunflower, rapeseed, olive, corn, soybean, cotton and linseed. Of note is a composition of the invention wherein the one or more fatty acid esters of alkanols comprise fatty acid methyl esters derived from seed oils of sunflower, soybean, cotton or linseed, or seed oils of rapeseed or soybean. Of particular note is a composition of the invention wherein the one or more fatty acid esters of alkanols (i.e. component (e)) comprise fatty acid methyl esters derived from soybean oil (also known as methylated soybean oil or methyl soyate).

Fatty acid esters of alkanols and methods for their preparation are well known in the art. For example, "biodiesel" typically comprises fatty acid esters of ethanol or more commonly methanol. Two principal routes used to prepare fatty acid alkanol esters are transesterification starting with another fatty acid ester (often a naturally occurring ester with glycerol) and direct esterification starting with the fatty acid. A variety of methods are known for these routes. For example, direct esterification can be accomplished by contacting a fatty acid with an alkanol in the presence of a strong acid catalyst such as sulfuric acid. Transesterification can be accomplished by contacting a starting fatty acid ester (e.g., a triglyceride) with the alcohol in the presence of a strong acid catalyst such as sulfuric acid but more commonly a strong base such as sodium hydroxide.

Alkylated seed oils are the transesterification products of seed oils with an alkanol. For example methylated soybean oil, also known as methyl soyate, comprises methyl esters produced by the transesterification of soybean oil with methanol. Methyl soyate thus comprises methyl esters of fatty acids in the approximate molar ratio that the fatty acids occur esterified with glycerol in soybean seed oil. Alkylated seed oils such as methyl soyate can be distilled to modify the proportion of methyl fatty acid esters, but this additional step typically provides no advantage for the composition of the present invention.

Although the liquid carrier in the composition of the present invention can further comprise one or more additional formulating ingredients such as other substances used as liquid carriers, preferably the liquid carrier does not comprise liquid carrier substances besides the one or more polyalkoxylated triglycerides of component (d) and one or more fatty acid esters of C₁-C₄ alkanols as component (e), which are optimal for the liquid phase of the present composition. In particular, preferably the liquid carrier does not comprise substantial amounts of unmodified (e.g., unalkoxylated) triglycerides (e.g., unalkoxylated seed and fruit oils). Because manufacturing processes to polyalkoxylate triglycerides can leave a small percentage of triglyceride molecules unalkoxylated, commercial polyalkoxylated triglyceride products available for forming component (d) can contain minor amounts of unalkoxylated triglycerides, which can be regarded as impurities. U.S. Patent 6,008,392, already mentioned, teaches a process using not only a hydrotalcite catalyst but also a co-catalyst to reduce the amount of unalkoxylated fatty acid ester below detection limits. Any minor amounts of unmodified triglyceride impurities in polyalkoxylated triglyceride products are reasonably expected to have a negligible effect on the properties of the present composition. Preferably no unalkoxylated triglycerides from other sources (e.g., unmodified seed and fruit oil products) are included in the present composition.

Unmodified (e.g., unalkoxylated) seed and fruit oils (e.g., rapeseed oil, corn oil, soybean oil) have much greater viscosities than fatty acid esters of C₁-C₄ alkanols. Although high viscosity reduces pourability, high viscosity can be beneficial in helping prevent separation and settling of suspended solids in suspension concentrate formulations. However, the present composition comprising one or more polyalkoxylated triglycerides in addition to the one or more fatty acid esters of C₁-C₄ alkanols has been discovered to be sufficiently resistant to separation and settling even without inclusion of unmodified triglycerides. Furthermore, fatty acids esters of C₁-C₄ alkanols in the present suspension concentrate compositions have been discovered to provide remarkable herbicidal efficacy, significantly better than suspension concentrate compositions in which the fatty acid esters of C₁-C₄ alkanols are replaced by unmodified seed and fruit oils. Therefore the amount of unmodified triglycerides such as seed and fruit oils is preferably minimized in the present composition. The present composition preferably contains no more than 10%, 5%, 2%, 1%, 0.5%, 0.2% or 0.1% (with increasing preference) by weight of unmodified triglycerides.

Certain manufacturing processes to polyalkoxylate triglycerides can also form alkoxylated fatty acids (also known as polyalkoxylated fatty acids, fatty acid alkoxylates, ethoxylated fatty acids, ethoxylated fatty acid esters, etc.) as impurities. Although alkoxylated fatty acids have surfactant properties, the present composition primarily relies upon one or more polyalkoxylated triglycerides wherein no more than 50% by weight of the fatty acid-derived moieties in polyalkoxylated triglycerides are derived from hydroxy fatty acids (i.e. component (d)) for surfactant properties promoting emulsification. Replacing component (d) with substantial amounts of alkoxylated fatty acids is thus undesirable, and preferably alkoxylated fatty acids are minimized in the present composition. The present composition preferably contains no more than 10%, 5%, 2%, 1%, 0.5%, 0.2% or 0.1% (with increasing preference) by weight of alkoxylated fatty acids.

In the present compositions the one or more sulfonylurea herbicides (i.e. component (a)) have low solubility in the liquid carrier comprising one or more polyalkoxylated triglycerides (i.e. component (d)) and optionally one or more fatty acid esters of C₁-C₄ alkanols (i.e. component (e)), and therefore the present compositions are typically in the form of suspensions of solid particles of component (a) in the liquid carrier. Moreover, other active ingredients or formulating ingredients may be suspended as solid particles in the liquid carrier. Furthermore, dilution of the present compositions with water for spraying typically results in an aqueous suspension of solid particles of component (a) as well as possibly other solid active ingredients or formulating ingredients having relatively low water solubility (i.e. not being completely soluble in the amount of water present).

The compositions of the present invention may include up to 70% by weight of one or more additional formulating ingredients (i.e. component (f)). Typically component (f) is up to 60%, more typically up to 50%, 40%, 30%, 25%, 20% or 15% and most typically up to 10% of the composition by weight. The additional formulating ingredients may include additional surfactants besides the polyalkoxylated triglycerides (which have emulsifier properties) of component (d). However, the composition of the present invention relies primarily upon component (d) (i.e. the one or more polyalkoxylated triglycerides wherein no more than 50% by weight of the fatty acid-derived moieties in the polyalkoxylated triglycerides are derived from hydroxy fatty acids) for surfactant properties promoting emulsification and therefore typically contains no more than 10%, 5%, 4%, 3% or even 2% by weight of other surfactants.

Surfactants (also known as "surface-active agents") generally modify, and most often reduce, the surface tension of a liquid. Depending on the nature of the hydrophilic and lipophilic groups in a surfactant molecule, surfactants can be useful as wetting agents, dispersing agents (i.e. dispersants), emulsifiers or anti-foaming agents (i.e. defoamers). Surfactants are described as anionic, non-ionic or cationic surfactants based on the chemical nature of their hydrophilic groups. Typical surfactants are described in McCutcheon's Detergents and Emulsifiers Annual, Allured Publ. Corp., Ridgewood, New Jersey, as well as Sisely and Wood, Encyclopedia of Surface Active Agents, Chemical Publ. Co., Inc., New York, 1964.

An anionic surfactant is a surface-active molecule in which the hydrophilic group connected to the lipophilic portion of the molecule forms a negative ion (i.e. anion) when placed in an aqueous medium. Carboxylate, sulfate, sulfonate and phosphate are the hydrophilic groups commonly found in anionic surfactants. Examples of anionic surfactants include sodium alkylnaphthalene sulfonates, naphthalenesulfonate formaldehyde condensates, alkylbenzenesulfonates, lignosulfonates, alkyl sulfates, alkyl ether sulfates, dialkyl sulfosuccinates, N,N-dialkyltaurates, polycarboxylates (e.g., polyacrylates), phosphate esters, ethoxylated tristyrylphenol phosphate salts and alkali salts of fatty acids.

A non-ionic surfactant is a surface-active molecule that does not contain ionizable polar end groups but does contain hydrophilic and lipophilic portions. Examples of non-ionic surfactants include ethoxylated alcohols, ethoxylated alkylphenols, ethoxylated sorbitol esters, ethoxylated fatty acid esters, polyoxyethylene/polyoxypropylene block copolymers, glycerol esters, and alkylpolyglycosides where the number of glucose units, referred to as degree of polymerization (D.P.), can range from 1 to 3 and the alkyl units can range from C₆ to C₁₄ (see Pure and Applied Chemistry 72, 1255-1264). As is well known in the art, in these surfactants "ethoxylated" refers to the presence of chains comprising one or more oxyethylene units (-OCH₂CH₂-) formed by reaction of ethylene oxide with hydroxyl groups on the sorbitan, sorbitol or fatty acid components, respectively. In ethoxylated sorbitan esters and ethoxylated sorbitol esters, the hydroxyl groups present after ethoxylation are esterified. If more than one oxyethylene unit is generally present on each surfactant molecule, "polyoxyethylene" can be included in the surfactant name, or alternatively a POE (polyoxyethylene) number can be included in the name to indicate the average number of oxyethylene units per molecule.

A cationic surfactant is a surface-active molecule in which the hydrophilic group connected to the lipophilic portion of the molecule forms a positive ion (i.e. cation) when placed in aqueous solution. Examples of cationic surfactants include quaternary ammonium salts such as ethoxylated fatty amines, benzylalkylammonium salts, pyridinium salts and quaternary imidazolium compounds.

Although not required, component (f) may comprise one or more dispersants to reduce the tendency of particles to stick together either in the present composition before dilution or after dilution with water. Particles sticking together may result in flocculation (i.e. particles loosely sticking together) or coagulation (i.e. particles irreversibly agglomerating). Dispersants, also called dispersing agents, can reduce attractive forces between particles in close proximity. A wide variety of dispersants are known in the art of formulation, including those described in McCutcheon's Detergents and Emulsifiers Annual, Allured Publ. Corp., Ridgewood, New Jersey, as well as Sisely and Wood, Encyclopedia of Surface Active Agents, Chemical Publ. Co., Inc., New York, 1964. Examples of dispersants include lignosulfonates, formaldehyde condensates of naphthalenesulfonates or alkylnaphthalene sulfonates (e.g., MORWET D425), condensed methylnaphthalenesulfonates (e.g., SUPRAGIL MNS/90), anionic condensation products of alkylphenol, formaldehyde and optionally sodium sulfite, salts of polycarboxylic acids (e.g., polyacrylic acids), phosphate esters of tristyrylphenol ethoxylates (e.g., SOPROPHOR 3D33), polyethylene/polypropylene block polymers (e.g., PLURONIC F108, ATLOX 4912, ATLAS G-5000, SYNPERONIC PE series copolymers) and ethylene oxide-propylene oxide based acrylic acid graft copolymers such as methyl methacrylate graft copolymers (e.g., ATLOX 4913). When component (f) comprises one or more dispersants, the total amount of the dispersants is generally up to 30%, typically up to 20%, and more typically up to 10% of the composition by weight.

Lignosulfonates have been found to be particularly useful dispersants in the present compositions, because lignosulfonates can significantly further increase the chemical stability of sulfonylurea herbicides in admixture with the liquid carrier comprising one or more polyalkoxylated triglycerides wherein no more than about 50% by weight of the fatty acid-derived moieties in the polyalkoxylated triglycerides are derived from hydroxy fatty acids, and optionally also comprising fatty acid esters of alkanols. Lignin, the basic building block of the lignosulfonates of this invention is formed in woody plants and is a complex natural polymer with regard to structure and homogeneity. Lignosulfonates are sulfonated plant lignins and are commercially well known co-products of the paper industry. Lignosulfonates can be prepared by a chemical modification of the basic lignin building block using a sulfite pulping process or a kraft pulping (also known as sulfate pulping) process including subsequent sulfonation. These pulping processes are well known in the paper industry. The sulfite pulping process and the kraft pulping process are described in literature published by Lignotech (e.g., "Specialty Chemicals for Pesticide Formulations", October, 1998) and MeadWestvaco Corp (e.g., "From the Forests to the Fields", June, 1998). Crude lignosulfonate preparations typically contain in addition to sulfonated lignin other plant derived chemicals such as sugars, sugar acids and resins, as well as inorganic chemicals. Although such crude lignosulfonate preparations can be used for the compositions of the present invention, preferably the crude preparations are first refined to provide higher purity of lignosulfonate. Lignosulfonates within the context of the present disclosure and claims also include lignosulfonates that have been extensively chemically modified. Examples of lignosulfonates that have been extensively chemically modified are oxylignins in which the lignin has been oxidized in a process reducing the number of sulfonic acid and methoxyl groups and causing rearrangements increasing the number of phenolic and carboxylic acid groups. An example of an oxylignin is VANISPERSE A marketed by Borregaard LignoTech.

Lignosulfonates vary according to cation, degree of sulfonation and average molecular weight. The lignosulfonates of the present invention can contain sodium, calcium, magnesium, zinc, potassium or ammonium cations or mixtures thereof, but preferably contain sodium. The degree of sulfonation is defined as the number of sulfonate groups per 1000 unit molecular weight of lignosulfonate and in commercially available products typically ranges from 0.5 to 4.7. The lignosulfonates in the compositions of the present invention preferably contain a degree of sulfonation ranging from 0.5 to 3.0. Lignosulfonates containing a degree of sulfonation from 0.5 to 3.0 can be prepared by controlled sulfonation in the kraft pulping process. For example, the degree of sulfonation using the kraft pulping process is 2.9 for REAX 88A, 0.8 for REAX 85A and 1.2 for REAX 907, which are described further below. Average molecular weight of commercially available lignosulfonates typically range from 2,000 to 15,100. The lignosulfonates of the present invention preferably have an average molecular weight above 2,900.

Examples of commercially available refined lignosulfonate products useful in the compositions of the present invention include, but are not limited to, REAX 88A (sodium salt of a chemically modified low molecular weight kraft lignin polymer solubilized by five sulfonate groups, marketed by MeadWestvaco Corp.), REAX 85A (sodium salt of a chemically modified high molecular weight kraft lignin polymer, marketed by MeadWestvaco Corp.), REAX 907 (sodium salt of a chemically modified high molecular weight kraft lignin polymer, marketed by MeadWestvaco Corp.), REAX 100M (sodium salt of a chemically modified low molecular weight kraft lignin polymer marketed by MeadWestvaco Corp.) and KRAFTSPEARSE DD-5 (sodium salt of a chemically modified high molecular weight kraft lignin polymer, marketed by MeadWestvaco Corp.).

When component (f) comprises one or more lignosulfonates, the total amount of lignosulfonates is typically at least 0.5% of the composition by weight, although lesser amounts down to 0.1% can be used. More typically the one or more lignosulfonates amount to at least about 1% of the composition, and greater amounts such as at least 2% or at least 3% of the composition by weight can be used and may be advantageous. The total amount of the one or more lignosulfonates in the compositions of the present invention can range up to 30% by weight, but for reasons of cost the total amount is typically no more than 10%, preferably no more than 8%, more preferably no more than 6%, more preferably no more than 5%, and most preferably no more than 4% of the composition by weight.

The present compositions comprising one or more polyalkoxylated triglycerides wherein no more than 50% by weight of the fatty acid-derived moieties in the polyalkoxylated triglycerides are derived from hydroxy fatty acids show good stability even in the absence of lignosulfonates, but inclusion of lignosulfonates can further increase stability, which may be desirable if the compositions are to be stored under hot ambient conditions, which tend to promote decomposition of sulfonylurea herbicides. The amount of lignosulfonates needed to provide a desired increased degree of stability depends upon the sulfonylurea herbicide and other ingredients in the composition, and can be determined by simple experimentation. To be suitable for storage under hot ambient conditions, the percent relative decomposition measured after accelerated aging at 40 °C for 1 week should be less than 10% and preferably less than 5%. Only small amounts of lignosulfonates (e.g., 1-2% of the composition by weight) are typically needed to significantly reduce the decomposition of sulfonylurea herbicides such as nicosulfuron in the compositions of the present invention under accelerated aging conditions.

The compositions of the present invention may include one or more surfactants in component (f) besides the one or more polyalkoxylated triglycerides of component (d) to enable forming an emulsion when the compositions are added to water in a spray tank. These surfactants can be cationic, anionic or nonionic, but are more typically anionic or nonionic. Examples of suitable anionic surfactants for this purpose are sulfonates such as calcium dodecyl benzenesulfonate. Examples of suitable nonionic surfactants are polyoxyethylated (POE) sorbitan esters such as POE (20) sorbitan trioleate and polyoxyethylated (POE) sorbitol esters such as POE (40) sorbitol hexaoleate. POE (20) sorbitan trioleate is commercially available under the tradename TWEEN 85 marketed by Uniqema. POE (40) sorbitol hexaoleate is commercially available under the tradenames ATLAS G1086 and CIRRASOL G1086 marketed by Uniqema.

The present compositions may also contain one or more solid diluents in suspension in the liquid carrier. The solid diluents can be water-soluble or water-insoluble. Typical solid diluents are described in Watkins et al., Handbook of Insecticide Dust Diluents and Carriers, 2nd Ed., Dorland Books, Caldwell, New Jersey. Examples of water-soluble solid diluents include salts such as alkali metal phosphates (e.g., sodium dihydrogen phosphate), alkaline earth metal phosphates, sulfates of sodium, potassium, magnesium and zinc, sodium and potassium chloride, and sodium benzoate, and sugars and sugar derivatives such as sorbitol, lactose and sucrose, and urea (H₂NC(O)NH₂). Examples of water-insoluble solid diluents include, but are not limited to, clays, synthetic and diatomaceous silicas, calcium and magnesium silicates, titanium dioxide, aluminum, calcium and zinc oxide, calcium and magnesium carbonate, sodium, potassium, calcium and barium sulfate, and charcoal.

Certain solid diluents such as clays and urea have been discovered to provide significant resistance to separation of suspended or dispersed solid particles in the present composition, which otherwise would result in formation of a bleed layer (i.e. layer not containing suspended or dispersed solid particles). Furthermore it has been discovered that these solid diluents can impart a reversible gel structure to the composition. A reversible gel provides high viscosity to the composition at low shear (e.g., when the composition is stored in a container), but low viscosity facilitating pouring results when high shear is applied (e.g., when a container of the composition is shaken). A benefit of reversible gel structure is that formation of a bleed layer and sedimentation of particles to the bottom of the container are significantly reduced.

Typically, a composition of this invention containing at least 0.1% clay by weight will form a reversible gel. More than 10% clay can be useful, but for reason of cost, no more than about 10% is preferred. More preferred is a range of from 0.1 to 5%, and most preferred is a range of from 0.5 to 3%. Examples of clays useful in the present composition include magnesium aluminum silicates such as attapulgite (e.g., ATTAGEL 50 from BASF Corp.) and other aluminum silicates such as montmorillonite (e.g., BARDEN clay from the Kentucky-Tennessee Clay Co. and BENTONE clay from Elementis Specialties). Typical solid clays useful as diluents are described in Watkins et al., Handbook of Insecticide Dust Diluents and Carriers, 2nd Ed., Dorland Books, Caldwell, New Jersey.

Urea has been found to be useful not only for thickening the present compositions but also to significantly further increase the chemical stability of one or more sulfonylurea herbicides in admixture with the liquid carrier comprising one or more polyalkoxylated triglycerides wherein no more than 50% by weight of the fatty acid-derived moieties in the polyalkoxylated triglycerides are derived from hydroxy fatty acids, and optionally also comprising fatty acid esters of alkanols. When urea is included in the present composition, it typically amounts to at least 0.1% and no more than 10% of the composition by weight. More typically urea is included in an amount from 0.2 to 5%, and most typically from 1 to 3% of the composition by weight.

Other formulation ingredients may be used in the composition of the present invention such as rheology modifiers, dyes, drying agents, and the like. These ingredients are known to one skilled in the art and can be found described, for example, in McCutcheon's 2001, Volume 2: Functional Materials published by MC Publishing Company.

The composition of the present invention can be applied directly to the growing medium of the undesired vegetation to be controlled (e.g., suppressed or killed), such as the soil of an agricultural field or the water in a flooded paddy, but usually the composition is first diluted with water and then sprayed on the undesired vegetation or the environment of the undesired vegetation. Addition of the present composition to a larger volume of water typically forms a suspoemulsion, i.e., a suspension of solid particles of the one or more sulfonylurea herbicides and optionally other solid components such as clays, together with an emulsion of droplets comprising the one or more polyalkoxylated triglycerides and optionally the one or more fatty acid esters of C₁-C₄ alkanols. To form a spray mixture, the ratio of the volume of the present composition to the volume of water used to dilute it is generally in the range from 1:20 to 1:10000, typically from 1:50 to 1:5000, more typically from 1:75 to 1:2000, and most typically from 1:100 to 1:1000.

Without further elaboration, it is believed that one skilled in the art using the preceding description can utilize the present invention to its fullest extent. The following Examples are, therefore, to be construed as merely illustrative, and not limiting of the disclosure in any way whatsoever.

### FORMULATION EXAMPLES

The following Examples describe the preparation and stability testing of compositions of the present invention. Technical grade nicosulfuron and thifensulfuron-methyl were used to prepare the Example compositions; the percent active ingredient in the technical material is shown in parentheses and the weight listed refers to the weight of the technical material. The stability of the sulfonylureas in the compositions prepared in the Examples was determined by aging samples in heated ovens and then comparing the sulfonylurea content before and after aging to determine percent (%) relative decomposition. The % relative decomposition was calculated by subtracting the final weight % sulfonylurea from the initial weight % sulfonylurea, then dividing the resulting difference by the initial weight % sulfonylurea, and then multiplying the resulting quotient by 100%. Sulfonylurea content was determined by assaying the compositions with high-pressure liquid chromatography (HPLC) using reverse phase columns and eluants.

### EXAMPLE 1

To a 250-mL glass beaker equipped with an overhead stirrer was added an ethoxylated soybean oil (Cognis Corp. AGNIQUE SBO-10, 91.7 g), a lignosulfonate (MeadWestvaco Corp. REAX 907, 2.0 g), nicosulfuron (93.5%, 4.3 g) and attapulgite clay (Engelhard ATTAGEL 50, 2.0 g). The mixture was then homogenized using a 0.2-L Eiger-mill, and the resulting suspension concentrate, a composition of the present invention, was bottled. A sample was aged in an oven heated to 40 °C for 1 week, and then the content of sulfonylurea herbicide was assayed by HPLC. Chemical stability results are listed in Table 1.

### EXAMPLE 2

To a 250-mL glass beaker equipped with an overhead stirrer was added an ethoxylated soybean oil (Cognis Corp. AGNIQUE SBO-30, 91.7 g), a lignosulfonate (MeadWestvaco Corp. REAX 907, 2.0 g), nicosulfuron, (93.5%, 4.3 g) and attapulgite clay (Engelhard ATTAGEL 50, 2.0 g). The mixture was then homogenized using a 0.2-L Eiger-mill, and the resulting suspension concentrate, a composition of the present invention, was bottled. A sample was aged in an oven heated to 40 °C for 1 week, and then the content of sulfonylurea herbicide was assayed by HPLC. Chemical stability results are listed in Table 1.

**Table 1 - Chemical Stability of Nicosulfuron during Aging of Liquid Formulations**

| Sample | Weight % Nicosulfuron | Aging Conditions | % Relative Decomposition |
|---|---|---|---|
| Example 1 | 4.0 | 1 week at 40 °C | 0 |
| Example 2 | 4.0 | 1 week at 40°C | 2.5 |

### EXAMPLES 3-25

Composition Examples 3-25 further exemplify the present invention. Formulation ingredients were combined in the amounts shown in Table 2 according to the following general procedure. To a 250-mL glass beaker stirred with an overhead stirrer was added a polyalkoxylated triglyceride (AGNIQUE SBO-10 and/or AGNIQUE SBO-30), nicosulfuron active ingredient (technical material containing 93.5% nicosulfuron) and optionally other ingredients such as thifensulfuron-methyl (technical material containing 99% thifensulfuronmethyl), C₁₆-C₁₈ fatty acid methyl ester (AGNIQUE ME 18SDU), a lignosulfonate (REAX 907), a solid diluent attapulgite clay (Engelhard ATTAGEL 50) or urea. The mixture was then homogenized using a 0.2-L Eiger-mill, and the resulting suspension concentrate, a composition of the present invention, was bottled.

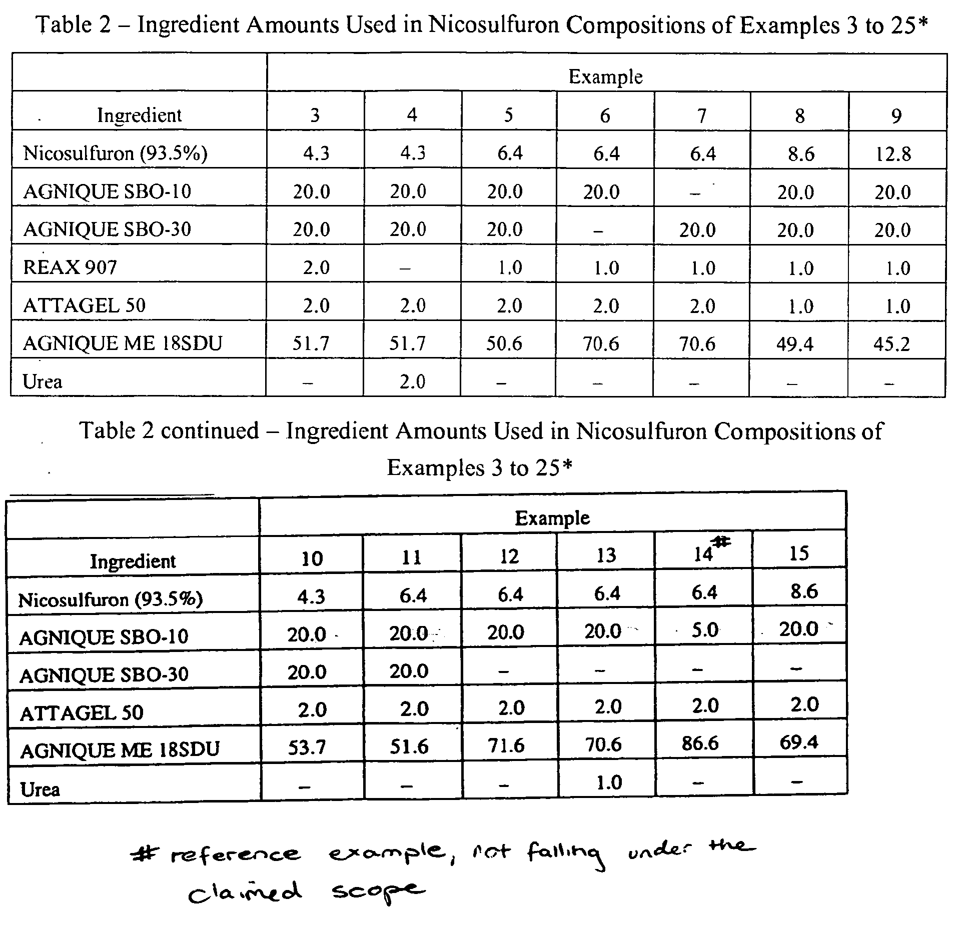

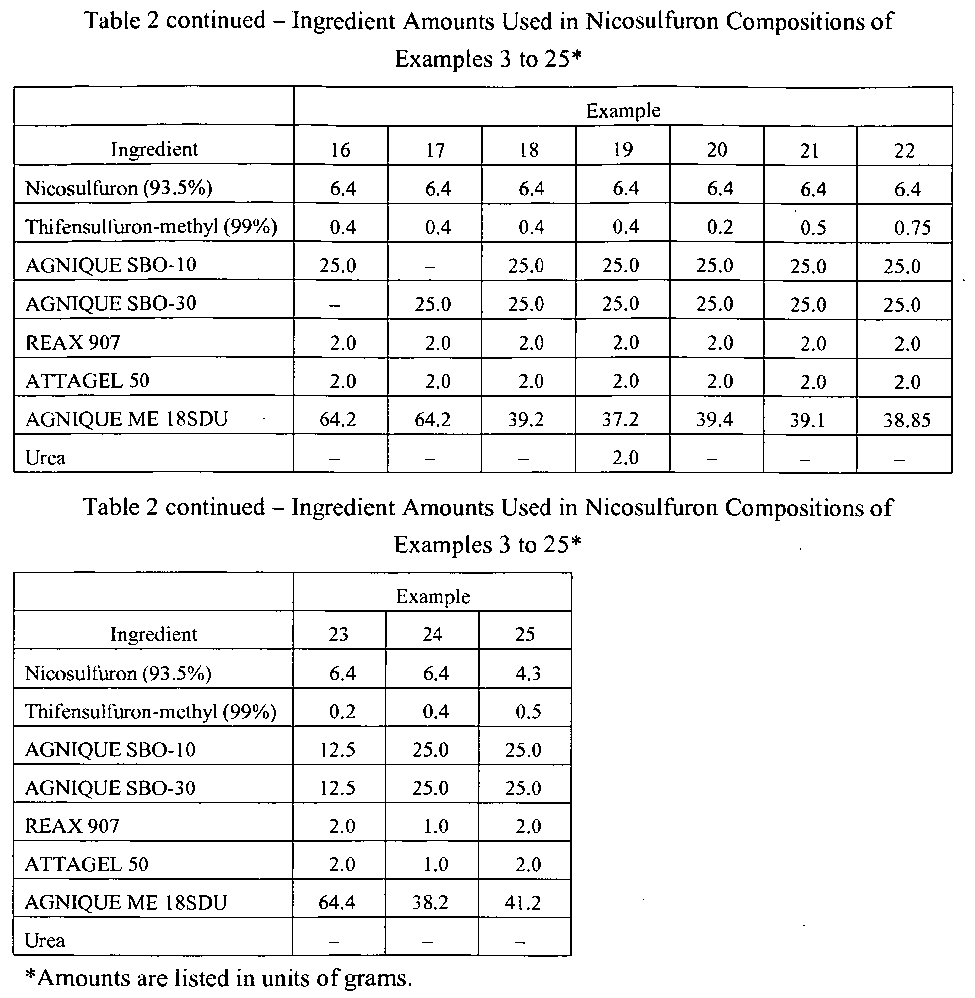

Samples of the compositions of Examples 3-19 (one 10-g sample for each time period) were aged in an oven at 40 °C for 1, 2 or 8 weeks. The aged samples were assayed by HPLC for nicosulfuron and thifensulfuron-methyl content. Chemical stability results are listed in Tables 3, 4 and 5.

**Table 3 - Chemical Stability of Nicosulfuron (% Relative Decomposition) during Aging of Compositions of Examples 3 to 9 at 40 °C**

| | Example | | | | | | |
|---|---|---|---|---|---|---|---|
| Time period | 3 | 4 | 5 | 6 | 7 | 8 | 9 |
| 1 week | 0.80 | 0.90 | 0.26 | 0.06 | 0.26 | 0.00 | 0.10 |
| 8 weeks | 2.27 | 1.71 | 2.50 | 1.01 | 1.52 | 0.00 | 0.50 |

As can be seen from Table 3, all the example compositions comprising nicosulfuron demonstrated excellent stability in this test.

**Table 4 - Chemical Stability ofNicosulfuron (% Relative Decomposition) during Aging of Compositions of Examples 10 to 15 at 40 °C**

| | Example | | | | | |
|---|---|---|---|---|---|---|
| Time period | 10 | 11 | 12 | 13 | 14^{#} | 15 |
| 8 weeks | 3.9 | 2.9 | 1.4 | 1.0 | 0.4 | 0.5 |

| | | | | | | |
|---|---|---|---|---|---|---|
| ^{#}reference example not in the claimed scope | | | | | | |

As can be seen from Table 4, all the example compositions comprising nicosulfuron demonstrated excellent stability in this test.

**Table 5 - Chemical Stability of Nicosulfuron and Thifensulfuron-methyl (% Relative Decomposition) during Aging of Compositions of Examples 16 to 19 at 40 °C**

| | | Example | | | |
|---|---|---|---|---|---|
| Time period | | 16 | 17 | 18 | 19 |
| 2 weeks | Nicosulfuron (% Relative Decomposition) | 1.9 | 2.8 | 1.8 | 0.3 |
| 2 weeks | Thifensulfuron-methyl (% Relative Decomposition) | 7.5 | 14.5 | 16.1 | 0.0 |

As can be seen from Table 5, all the example compositions comprising nicosulfuron and thifensulfuron-methyl demonstrated good-to-excellent stability in this test.

### HERBICIDE TEST EXAMPLES

### TEST A

Seeds of corn (ZEAMD, *Zea maps* L. ssp. *indentata* (Sturtev.) L. H. Bailey) and crabgrass (DIGSA, *Digitaria sanguinalis* (L.) Scop.) were planted into 15-cm plastic pots containing Redi-Earth^{®} potting media (Scotts-Sierra Horticultural Products Company, Marysville, Ohio 43041). Seedlings were grown in a greenhouse, supplemented with artificial light, under a 16-h photoperiod with approximately 28 °C daytime and 22 °C nighttime temperatures. Plants were watered and fertilized as necessary for rapid growth. Seedlings of corn and crabgrass were thinned to uniform populations per pot just prior to herbicide application. Corn plants were at the V3 growth stage and crabgrass plants were at the 3-leaf stage (approximately 12 cm tall) when samples of the formulation example compositions were applied.

Test samples of the compositions prepared as described in the Formulation Examples were diluted with water at approximately 25 °C, and treatments were sprayed at 262 kPa in a volume of 280 L/ha postemergence to corn and crabgrass plants. Each treatment included four replicates. Subsets of untreated corn and crabgrass plants were harvested at the time of herbicide application, and shoot fresh weights were recorded to serve as baselines to measure additional plant growth after treatment applications. Treated and untreated plants were allowed to grow in the greenhouse for an additional 15 days. Corn and crabgrass shoots were then harvested and shoot fresh weights were recorded. Herbicidal efficacy (i.e. plant injury) was determined by calculating inhibition of growth of shoot fresh weight relative to untreated control plants after application of sample treatments. Treatment results calculated as the arithmetic means of the replicates and expressed as percent inhibition of new growth are listed in Table A. Negative numbers indicate that shoots of the treated plants were heavier than shoots of the control plants.

**Table A - Inhibition of New Growth of Corn and Crabgrass Plants Treated with Formulation Example Compositions of Nicosulfuron.**

| Composition | Nicosulfuron | Inhibition of new growth (%) | |
|---|---|---|---|
| | g a.i./ha | DIGSA | ZEAMD |
| Example 1 | 10 | 72 | 5 |
| | 20 | 95 | -2 |
| | 40 | 98 | 2 |
| | 80 | 97 | 7 |
| | 160 | 98 | -12 |
| Example 2 | 10 | 77 | 20 |
| | 20 | 87 | -23 |
| | 40 | 96 | -4 |
| | 80 | 98 | -1 |
| | 160 | 99 | 12 |
| Example 3 | 10 | 80 | 3 |
| | 20 | 97 | 3 |
| | 40 | 97 | 23 |
| | 80 | 98 | 19 |
| | 160 | 99 | 34 |
| Example 4 | 10 | 76 | -3 |
| | 20 | 92 | 10 |
| | 40 | 94 | -4 |
| | 80 | 95 | -3 |
| | 160 | 98 | 9 |

The results for the test in Table A show the Example compositions of the present invention being highly efficacious in inhibiting new growth of crabgrass, providing substantial effect even at the lowest application rate. In addition, corn plant responses indicated the Example compositions maintained satisfactory corn crop tolerance at application rates necessary for substantial growth inhibition of crabgrass.

### TEST B

Seeds of corn (*Zea may* ssp. *indentata*), black nightshade (*Solanum nigrum L.*), buckwheat (*Polygonum convolvulus* L.), lambsquarters (*Chenopodium album* L.), and velvetleaf (*Abutilon theophrasti* Medik.) were planted into pots containing a silt loam soil with 3% organic matter, and seeds of crabgrass (*Digitaria sanguinalis*) were planted into pots containing Redi-Earth^{®} potting media (Scotts-Sierra Horticultural Products Company, Marysville, Ohio 43041). Seedlings were grown in a greenhouse, supplemented with artificial light, under a 16-h photoperiod with approximately 28 °C daytime and 22 °C nighttime temperatures. Plants were watered and fertilized to support rapid growth. Seedlings were thinned to uniform populations per pot just prior to herbicide application. Plant growth stages at time of herbicide application were: corn V3; black nightshade 2-leaf; buckwheat, lambsquarters and velvetleaf 2-4-leaf; and crabgrass 3-leaf.

A sample of the composition of Example 19, prepared as previously described, was diluted with water at approximately 25 °C. Herbicide treatments were sprayed at 262 kPa in a volume of 280 L/ha postemergence to the plants. Each treatment consisted of four replications. Subsets of untreated corn plants were measured for plant height and subsets of crabgrass were measured for shoot fresh weight at the time of herbicide application to serve as baseline measurements for additional plant growth after treatment applications. For corn, herbicide response was measured by comparing the inhibition of additional growth in plant height of treated plants relative to additional growth in plant height of untreated plants 14 days after application of treatments. For crabgrass, herbicide response was measured by comparing the inhibition of additional growth in shoot fresh weight of treated plants relative to additional growth in shoot fresh weight of untreated plants 19 days after application of treatments. Visual responses of black nightshade, buckwheat, lambsquarters and velvetleaf were recorded 19 days after treatment. Visual responses were based on a 0-100 scale where zero is no response and 100 is plant death. Plant responses, expressed as percent inhibition of new growth, are shown in Table B.

**Table B - Inhibition of Growth of Plants Treated with an Example Composition Comprising a Combination of Nicosulfuron and Thifensulfuron-methyl**

| Plant species | Herbicide (g a.i./ha) | | Inhibition of Growth (%) |
|---|---|---|---|
| | Nicosulfuron | Thifensulfuron-methyl | |
| Corn | 26.4 | 1.8 | 3 |
| | 39.6 | 2.6 | 6 |
| | 52.8 | 3.5 | 7 |
| | 79.2 | 5.2 | 15 |
| | 105.6 | 7.0 | 35 |
| Black nightshade | 26.4 | 1.8 | 99 |
| | 39.6 | 2.6 | 99 |
| | 52.8 | 3.5 | 100 |
| | 79.2 | 5.2 | 100 |
| | 105.6 | 7.0 | 100 |
| Buckwheat | 26.4 | 1.8 | 99 |
| | 39.6 | 2.6 | 100 |
| | 52.8 | 3.5 | 100 |
| | 79.2 | 5.2 | 100 |
| | 105.6 | 7.0 | 100 |
| Crabgrass | 26.4 | 1.8 | 90 |
| | 39.6 | 2.6 | 97 |
| | 52.8 | 3.5 | 98 |
| | 79.2 | 5.2 | 99 |
| | 105.6 | 7.0 | 99 |
| Lambsquarters | 26.4 | 1.8 | 82 |
| | 39.6 | 2.6 | 93 |
| | 52.8 | 3.5 | 100 |
| | 79.2 | 5.2 | 100 |
| | 105.6 | 7.0 | 100 |
| Velvetleaf | 26.4 | 1.8 | 97 |
| | 39.6 | 2.6 | 100 |
| | 52.8 | 3.5 | 100 |
| | 79.2 | 5.2 | 100 |
| | 105.6 | 7.0 | 100 |

Test results in Table B show the composition of Example 19 effectively controls the problem weed species black nightshade, buckwheat, crabgrass, lambsquarters and velvetleaf while maintaining sufficient corn tolerance for utility in selective weed control.

## Claims

1. A single liquid-phase herbicide composition comprising by weight
(a) from 0.1 to 30% of one or more sulfonylurea herbicides selected from azimsulfuron, bensulfuron-methyl, chlorimuron-ethyl, chlorsulfuron, ethametsulfuron-methyl, flupyrsulfuron-methyl, metsulfuron-methyl, nicosulfuron, rimsulfuron, sulfometuron-methyl, thifensulfuron-methyl, tribenuron-methyl, and triflusulfuron-methyl, and salts thereof;
(b) from 0 to 40% of one or more biologically active agents other than sulfonylurea herbicides;
(c) from 0 to 30% of one or more herbicide safeners;
(d) from 10 to 99.9% of one or more polyalkoxylated triglycerides wherein no more than 50% by weight of the fatty acid-derived moieties in the polyalkoxylated triglycerides are derived from hydroxy fatty acids;
(e) from 0 to 89.9% of one or more fatty acid esters of C₁-C₄ alkanols; and
(f) from 0 to 70% of one or more additional formulating ingredients.

2. The composition of Claim 1 wherein component (a) is selected from nicosulfuron, rimsulfuron and thifensulfuron-methyl, and salts thereof.

3. The composition of Claim 2 wherein component (a) is selected from nicosulfuron and salts thereof.

4. The composition of Claim 1 wherein no more than 5% by weight of the fatty acid-derived moieties in the polyalkoxylated triglycerides of component (d) are derived from hydroxy fatty acids.

5. The composition of Claim 1 wherein no more than 90% by weight of the fatty acid-derived moieties in the polyalkoxylated triglycerides of component (d) is derived from any one fatty acid compound.

6. The composition of Claim 1 wherein component (d) comprises one or more polyalkoxylated vegetable oils selected from polyethoxylated soybean oil and polyethoxylated rapeseed oil.

7. The composition of Claim 1 wherein component (e) is present in an amount of at least 0.1% of the composition by weight and comprises methyl esters of one or more fatty acids.

8. The composition of Claim 7 wherein component (e) is present in an amount of at least 30% of the composition by weight.

9. The composition of Claim 1 wherein component (f) is present in an amount of at least 0.1% of the composition by weight and comprises one or more ammonium, alkali metal or alkaline earth metal lignosulfonate salts.

10. The composition of Claim 9 wherein component (f) comprises sodium lignosulfonate.

11. The composition of Claim 1 wherein component (f) is present in an amount of at least 0.1% of the composition by weight and comprises one or more surfactants selected from the group consisting of polyethoxylated sorbitan ester surfactants and polyethoxylated sorbitol ester surfactants.

12. The composition of Claim 1 wherein component (f) is present in an amount of at least 0.1% of the composition by weight and comprises a clay.

13. The composition of Claim 1 containing no more than 5% of unmodified triglycerides and no more than 5% of alkoxylated fatty acids by weight.

14. The composition of Claim 1 consisting essentially of by weight from 2 to 8% of nicosulfuron, from 0 to 2% of thifensulfuron-methyl, from 30 to 50% of polyethoxylated soybean oil, from 35 to 65% of methylated soybean oil, from 0.5 to 5% of a clay, and from 0.5 to 4% of one or more lignosulfonates.

## Patentansprüche

1. Herbizidzusammensetzung in einer einzigen flüssigen Phase, umfassend
(a) von 0,1 bis 30 Gew.-% von einem oder mehreren Sulfonylharnstoff-Herbiziden, ausgewählt aus Azimsulfuron, Bensulfuron-methyl, Chlorimuron-ethyl, Chlorsulfuron, Ethametsulfuron-methyl, Flupyrsulfuron-methyl, Metsulfuron-methyl, Nicosulfuron, Rimsulfuron, Sulfometuron-methyl, Thifensulfuron-methyl, Tribenuron-methyl und Triflusulfuron-methyl und Salzen davon;
(b) von 0 bis 40 Gew.-% von einem oder mehreren biologisch aktiven Mitteln anders als Sulfonylharnstoff-Herbiziden;
(c) von 0 bis 30 Gew.-% von einem oder mehreren Herbizid-Safenern;
(d) von 10 bis 99,9 Gew.-% von einem oder mehreren polyalkoxylierten Triglyceriden, wobei nicht mehr als 50 Gew.-% von den Fettsäure-abgeleiteten Einheiten in den polyalkoxylierten Triglyceriden von Hydroxyfettsäuren abgeleitet sind;
(e) von 0 bis 89,9 Gew.-% von einem oder mehreren Fettsäureestern von C₁-C₄-Alkanolen; und
(f) von 0 bis 70 Gew.-% von einem oder mehreren zusätzlichen Formulierungsbestandteilen.

2. Zusammensetzung nach Anspruch 1, wobei Komponente (a) aus Nicosulfuron, Rimsulfuron und Thifensulfuron-methyl und Salzen davon ausgewählt ist.

3. Zusammensetzung nach Anspruch 2, wobei Komponente (a) aus Nicosulfuron und Salzen davon ausgewählt ist.

4. Zusammensetzung nach Anspruch 1, wobei nicht mehr als 5 Gew.-% von den Fettsäure-abgeleiteten Einheiten in den polyalkoxylierten Triglyceriden von Komponente (d) von Hydroxyfettsäuren abgeleitet sind.

5. Zusammensetzung nach Anspruch 1, wobei nicht mehr als 90 Gew.-% von den Fettsäure-abgeleiteten Einheiten in den polyalkoxylierten Triglyceriden von Komponente (d) von irgendeiner Fettsäureverbindung abgeleitet sind.

6. Zusammensetzung nach Anspruch 1, wobei Komponente (d) ein oder mehrere polyalkoxylierte Pflanzenöle, ausgewählt aus polyethoxyliertem Sojabohnenöl und polyethoxyliertem Rapsöl, umfasst.

7. Zusammensetzung nach Anspruch 1, wobei Komponente (e) in einem Anteil von mindestens 0,1 Gew.-% der Zusammensetzung vorhanden ist und Methylester von einer oder mehreren Fettsäuren umfasst.

8. Zusammensetzung nach Anspruch 7, wobei Komponente (e) in einem Anteil von mindestens 30 Gew.-% der Zusammensetzung vorhanden ist.

9. Zusammensetzung nach Anspruch 1, wobei Komponente (f) in einem Anteil von mindestens 0,1 Gew.-% der Zusammensetzung vorhanden ist und ein oder mehrere Ammonium-, Alkalimetall- oder Erdalkalimetalllignosulfonat-Salze umfasst.

10. Zusammensetzung nach Anspruch 9, wobei Komponente (f) Natriumlignosulfonat umfasst.

11. Zusammensetzung nach Anspruch 1, wobei Komponente (f) in einem Anteil von mindestens 0,1 Gew.-% der Zusammensetzung vorhanden ist und ein oder mehrere grenzflächenaktive Mittel, ausgewählt aus der Gruppe, bestehend aus grenzflächenaktiven Mitteln in Form von polyethoxyliertem Sorbitanester und grenzflächenaktiven Mitteln in Form von polyethoxyliertem Sorbitolester, umfasst.

12. Zusammensetzung nach Anspruch 1, wobei Komponente (f) in einem Anteil von mindestens 0,1 Gew.-% der Zusammensetzung vorhanden ist und einen Ton umfasst.

13. Zusammensetzung nach Anspruch 1, enthaltend nicht mehr als 5 Gew.-% von unmodifizierten Triglyceriden und nicht mehr als 5 Gew.-% von alkoxylierten Fettsäuren.

14. Zusammensetzung nach Anspruch 1, bestehend im Wesentlichen aus von 2 bis 8 Gew.-% von Nicosulfuron, von 0 bis 2 Gew.-% von Thifensulfuron-methyl, von 30 bis 50 Gew.-% von polyethoxyliertem Sojabohnenöl, von 35 bis 65 Gew.-% von methyliertem Sojabohnenöl, von 0,5 bis 5 Gew.-% von einem Ton und von 0,5 bis 4 Gew.-% von einem oder mehreren Lignosulfonaten.

## Revendications

1. Composition d'herbicide à phase liquide unique comprenant en poids
(a) de 0,1 à 30% d'un ou plusieurs herbicides sulfonylurées choisis parmi azimsulfuron, bensulfuron-méthyl, chlorimuron-éthyl, chlorsulfuron, éthametsulfuronméthyl, flupyrsulfuron-méthyl, metsulfuron-méthyl, nicosulfuron, rimsulfuron, sulfométuron-méthyl, thifénsulfuron-méthyl, tribénuron-méthyl et triflusulfuron-méthyl, et les sels de ceux-ci;
(b) de 0 à 40% d'un ou plusieurs agents biologiquement actifs autres que des herbicides sulfonylurées;
(c) de 0 à 30% d'un ou plusieurs phytoprotecteurs d'herbicide;
(d) de 10 à 99,9% d'un ou plusieurs triglycérides polyalcoxylés dans lesquels pas plus de 50% en poids des groupes dérivés d'acide gras dans les triglycérides polyalcoxylés sont dérivés d'hydroxy acides gras;
(e) de 0 à 89,9% d'un ou plusieurs esters d'acides gras d'alcanols en C₁ à C₄; et
(f) de 0 à 70% d'un ou plusieurs ingrédients de formulation supplémentaires.

2. Composition selon la revendication 1, dans laquelle le constituant (a) est choisi parmi le nicosulfuron, le rimsulfuron et le thifénsulfuron-méthyl, et les sels de ceux-ci.

3. Composition selon la revendication 2, dans laquelle le constituant (a) est choisi parmi le nicosulfuron et les sels de celui-ci.

4. Composition selon la revendication 1, dans laquelle pas plus de 5% en poids des groupes dérivés d'acide gras dans les triglycérides polyalcoxylés du constituant (d) sont dérivés d'hydroxy acides gras.

5. Composition selon la revendication 1, dans laquelle pas plus de 90% en poids des groupes dérivés d'acide gras dans les triglycérides polyalcoxylés du constituant (d) sont dérivés de n'importe quel composé d'acide gras.

6. Composition selon la revendication 1, dans laquelle le constituant (d) comprend une ou plusieurs huiles végétales polyalcoxylées choisies parmi l'huile de soja polyéthoxylée et l'huile de colza polyéthoxylée.

7. Composition selon la revendication 1, dans laquelle le constituant (e) est présent en une quantité d'au moins 0,1% en poids de la composition et comprend des esters méthyliques d'un ou plusieurs acides gras.

8. Composition selon la revendication 7, dans laquelle le constituant (e) est présent en une quantité d'au moins 30% en poids de la composition.

9. Composition selon la revendication 1, dans laquelle le constituant (f) est présent en une quantité d'au moins 0, 1 % en poids de la composition et comprend un ou plusieurs sels lignosulfonates d'ammonium, de métal alcalin ou de métal alcalino-terreux.

10. Composition selon la revendication 9, dans laquelle le constituant (f) comprend le lignosulfonate de sodium.

11. Composition selon la revendication 1, dans laquelle le constituant (f) est présent en une quantité d'au moins 0, 1 % en poids de la composition et comprend un ou plusieurs agents tensioactifs choisis dans le groupe constitué par les agents tensioactifs d'esters de sorbitane polyéthoxylés et les agents tensioactifs d'esters de sorbitol polyéthoxylés.

12. Composition selon la revendication 1, dans laquelle le constituant (f) est présent en une quantité d'au moins 0,1 % en poids de la composition et comprend une argile.

13. Composition selon la revendication 1, ne contenant pas plus de 5% en poids de triglycérides non modifiés et pas plus de 5% en poids d'acides gras alcoxylés.

14. Composition selon la revendication 1, consistant essentiellement en, en poids, de 2 à 8% de nicosulfuron, de 0 à 2% de thifénsulfuron-méthyl, de 30 à 50% d'huile de soja polyéthoxylée, de 35 à 65% d'huile de soja méthylée, de 0,5 à 5% d'une argile et de 0,5 à 4% d'un ou plusieurs lignosulfonates.
